# EUROPEAN PATENT APPLICATION

(11) **EP 4 240 012 A1**
(43) Date of publication of application: **06.09.2023**
(21) Application number: 23155909.7
(22) Date of filing: 09.02.2023
(51) Int. Cl.: H04N 7/15, H04L 12/18, G06T 19/00, G06F 3/01

(54) **UTILIZING AUGMENTED REALITY DATA CHANNEL TO ENABLE SHARED AUGMENTED REALITY VIDEO CALLS**

(30) Priority: 09.02.2022 US 202217650484
(71) Applicant: Meta Platforms, Inc., Menlo Park, CA 94025 (US)
(72) Inventor: SHERMAN, Jonathan Michael, Menlo Park, 94025 (US); SLATER, Michael, Menlo Park, 94025 (US); VERLINDE, Hannes Luc Herman, Menlo Park, 94025 (US); BARBOSA DA SILVA, Marcus Vinicius, Menlo Park, 94025 (US); HOBBS, Bret, Menlo Park, 94025 (US); BASANTA, Pablo Gomez, Menlo Park, 94025 (US); SHEHATA, Ahmed, Menlo Park, 94025 (US); BOGDANOV, Oleg, Menlo Park, 94025 (US)
(74) Representative: Murgitroyd & Company

(57) **Abstract**

Systems, methods, client devices, and non-transitory computer-readable media are disclosed for utilizing an augmented reality (AR) data channel to enable shared augmented reality video calls which facilitate the sharing of and interaction with AR elements during video calls. For example, the disclosed systems can establish a video call between client devices that include a video (and audio) data channel and an AR data channel. Moreover, in one or more embodiments, the disclosed systems enable one of the client devices to transmit AR data (e.g., AR element identifiers, AR elements, object vectors, participant identifiers) through an AR data channel to cause the other client device to render an AR element on a video captured by the other client device during a video call. Indeed, the disclosed systems can enable AR environments, AR effects, AR-based activities, and/or individual AR elements during a video call utilizing an AR data channel.

## Description

### BACKGROUND

The present disclosure generally relates to video calling systems. Video calling systems allow users to electronically communicate via computing devices (e.g., smart phones, laptops, tablets, desktop computers) through the use of audio and video inputs (e.g., a built-in digital camera, digital web camera). Indeed, recent years have seen an increase in electronic communications through video calls and video conferences that enable multiple users to communicate via computing devices to share both video and audio of the users to one another. However, conventional video calling systems are often limited to non-interactive video calls that simply and rigidly enable user devices to present and view captured videos between the user devices.

### SUMMARY

Embodiments of the present disclosure provide benefits and/or solve one or more of the foregoing or other problems in the art with systems, non-transitory computer-readable media, and methods that utilize a dedicated augmented reality data channel to enable shared augmented reality video calls, which facilitate the sharing of, and interaction with, augmented reality elements during video calls. For example, the disclosed systems can establish a video call between client devices that include a video (and audio) data channel and an AR data channel. Moreover, in one or more embodiments, the disclosed systems enable one of the client devices to transmit AR data (e.g., AR element identifiers, AR element information, logic data objects, object vectors, participant identifiers) through the AR data channel to cause the other client device to render an AR element on a video captured by the other client device.

For example, the disclosed systems can enable shared AR environments (and/or AR effects) during a video call that share AR environment scenes (and effects). In addition to AR environment scenes within video calls, the disclosed systems can also facilitate transitions of (and interactions with) AR objects (e.g., within AR environment scenes) between captured videos of multiple client devices participating in the video call. Furthermore, the disclosed systems can also utilize the transitions of (and interactions with) AR objects between captured videos of multiple client devices to enable AR-based games between participating client devices of a video call.

In accordance with a first aspect of the present disclosure, there is provided a computer-implemented method comprising: conducting, by a client device, a video call with a recipient participant device by receiving video data through a video data channel established for the video call from the recipient participant device; displaying, within a digital video call interface, a first video captured by the client device; displaying, within the digital video call interface, a second video from the recipient participant device by rendering the video data received through the video data channel; receiving augmented reality data indicating an augmented reality element from the recipient participant device through an augmented reality data channel established for the video call with the recipient participant device; and rendering the augmented reality element within the first video displayed within the digital video call interface based on the received augmented reality data.

In some embodiments, the method further comprises: rendering the augmented reality element within the first video displayed within the digital video call interface to share an augmented reality environment scene depicted within the second video from the recipient participant device, wherein the augmented reality element modifies at least one of a background, foreground, or video filter of the first video.

In some embodiments, the method further comprises: receiving additional augmented reality data indicating a modification to the augmented reality element from the recipient participant device through the augmented reality data channel; and modifying the augmented reality element within the first video based on the additional augmented reality data.

In some embodiments, the method further comprises: displaying, within the digital video call interface, the second video from the recipient participant device to depict an additional augmented reality element exiting a frame of the second video by rendering the video data received through the video data channel; receiving additional augmented reality data for the additional augmented reality element from the recipient participant device through the augmented reality data channel; and rendering the additional augmented reality element within the first video based on the received additional augmented reality data to depict the additional augmented reality element entering a frame of the first video.

In some embodiments, the method further comprises: identifying a participant identifier from the additional augmented reality data; and determining to render the additional augmented reality element within the first video by matching the participant identifier to the client device.

In some embodiments, the method further comprises: identifying an object vector from the additional augmented reality data; and rendering the additional augmented reality element within the first video at a particular location and moving in a particular direction utilizing the object vector.

In some embodiments, the method further comprises: rendering the augmented reality element within the first video to display an augmented reality effect interacting with a user depicted within the first video; and displaying, within the digital video call interface, the second video from the recipient participant device portraying an additional augmented reality effect interacting with a recipient user depicted within the second video.

In accordance with a second aspect of the present disclosure, there is provided a non-transitory computer-readable medium storing instructions that, when executed by at least one processor, cause a computing device to: conduct, by the computing device, a video call with a recipient participant device by receiving video data through a video data channel established for the video call from the recipient participant device; display, within a digital video call interface, a first video captured by the computing device; display, within the digital video call interface, a second video from the recipient participant device by rendering the video data received through the video data channel; receive augmented reality data indicating an augmented reality element from the recipient participant device through an augmented reality data channel established for the video call with the recipient participant device; and render the augmented reality element within the first video displayed within the digital video call interface based on the received augmented reality data.

In some embodiments, the non-transitory computer-readable medium further comprises instructions that, when executed by the at least one processor, cause the computing device to: detect a user movement interaction within the first video captured by the computing device; and modify the augmented reality element within the first video based on the user movement interaction.

In some embodiments, the non-transitory computer-readable medium further comprises instructions that, when executed by the at least one processor, cause the computing device to: display, within the digital video call interface, the second video from the recipient participant device to depict an additional augmented reality element exiting a frame of the second video by rendering the video data received through the video data channel; receive additional augmented reality data for the additional augmented reality element from the recipient participant device through the augmented reality data channel; and render the additional augmented reality element within the first video based on the received additional augmented reality data to depict the additional augmented reality element entering a frame of the first video.

In some embodiments, the non-transitory computer-readable medium further comprises instructions that, when executed by the at least one processor, cause the computing device to: render the augmented reality element within the first video to display an augmented reality effect interacting with a user depicted within the first video; and display, within the digital video call interface, the second video from the recipient participant device portraying an additional augmented reality effect interacting with a recipient user depicted within the second video.

In some embodiments, the non-transitory computer-readable medium further comprises instructions that, when executed by the at least one processor, cause the computing device to: identify a selection indicating the computing device as a subject participant within the augmented reality data; and render the augmented reality effect within the first video on the computing device to be different from the additional augmented reality effect displayed in the second video based on the selection indicating the computing device as the subject participant.

In some embodiments, the non-transitory computer-readable medium further comprises instructions that, when executed by the at least one processor, cause the computing device to receive the augmented reality data indicating the augmented reality element by filtering a set of augmented reality data in the augmented reality data channel.

In accordance with a third aspect of the present disclosure, there is provided a shared augmented reality video call system comprising: at least one server configured to establish a shared augmented reality video call between a first participant device and a second participant device by establishing a video data channel and an augmented reality data channel between the first participant device and the second participant device, wherein: the first participant device captures a first video stream and transmits the first video stream to the second participant device via the video data channel; the second participant device captures a second video stream and transmits the second video stream to the first participant device via the video data channel; the first participant device sends an augmented reality identifier to the second participant device via the augmented reality data channel; and the second participant device renders the second video stream with an augmented reality element associated with the augmented reality identifier.

In some embodiments, the system further comprises: the at least one server configured to establish the shared augmented reality video call, wherein the first participant device renders the first video stream with an additional augmented reality element associated with the augmented reality identifier to share an augmented reality environment scene depicted within the second video stream from the second participant device.

In some embodiments, the system further comprises: the at least one server configured to establish the shared augmented reality video call, wherein: the first participant device sends an additional augmented reality identifier to indicate an interaction with the augmented reality element; and the second participant device renders the second video stream with a modification to the augmented reality element based on the additional augmented reality identifier.

In some embodiments, the system further comprises: the at least one server configured to establish the shared augmented reality video call, wherein: the first participant device transmits the first video stream to the second participant device via the video data channel to depict the augmented reality element within the first video stream; and upon sending the augmented reality identifier to the second participant device via the augmented reality data channel: the first participant device transmits the first video stream to the second participant device via the video data channel to depict the augmented reality element exiting a frame of the first video stream; and the second participant device renders the second video stream with the augmented reality element associated with the augmented reality identifier entering a frame of the second video stream.

In some embodiments, the system further comprises: the at least one server configured to establish the shared augmented reality video call, wherein: the first participant device sends the augmented reality identifier to the second participant device via the augmented reality data channel to indicate an object vector for the augmented reality element; and the second participant device renders the second video stream with the augmented reality element associated with the augmented reality identifier at a particular location and moving in a particular direction utilizing the object vector.

In some embodiments, the system further comprises: the at least one server configured to establish the shared augmented reality video call, wherein: the second participant device renders the second video stream with the augmented reality element to display an augmented reality effect interacting with a user depicted within the second video stream; and the first participant device renders the first video stream with an additional augmented reality effect interacting with a user depicted within the first video stream.

In some embodiments, the system further comprises: the at least one server configured to establish the shared augmented reality video call, wherein: the first participant device sends the augmented reality identifier to a plurality of participant devices via the augmented reality data channel; and the plurality of participant devices render video streams with the augmented reality element associated with the augmented reality identifier.

Additional features and advantages of one or more embodiments of the present disclosure are outlined in the description which follows, and in part will be obvious from the description, or may be learned by the practice of such example embodiments.

### BRIEF DESCRIPTION OF THE DRAWINGS

The detailed description is described with reference to the accompanying drawings in which:
FIG. 1 illustrates an example environment in which a shared AR video call system can operate in accordance with one or more implementations.
FIG. 2 illustrates an example of a shared AR video call system establishing and facilitating a shared AR video call between participant devices in accordance with one or more implementations.
FIG. 3 illustrates a flow diagram of a shared AR video call system establishing an AR data channel and client devices communicating AR data during a video call in accordance with one or more implementations.
FIG. 4 illustrates a shared AR video call system establishing a video call with a shared AR environment scene between a plurality of client devices in accordance with one or more implementations.
FIG. 5 illustrates a shared AR video call system enabling an AR element to move from one client device to another client device during a video call in accordance with one or more implementations.
FIGS. 6A-6D illustrate a shared AR video call system enabling an AR-based activity between client devices of a video call using an AR data channel in accordance with one or more implementations.
FIG. 7 illustrates a shared AR video call system enabling shared AR effects between client devices on a video call in accordance with one or more implementations.
FIG. 8 illustrates a flowchart of a series of acts for rendering AR elements within a video call in accordance with one or more implementations.
FIG. 9 illustrates a flowchart of a series of acts for establishing a shared augmented reality video call in accordance with one or more implementations.
FIG. 10 illustrates a block diagram of an example computing device in accordance with one or more implementations.
FIG. 11 illustrates an example environment of a networking system having a virtual reality system in accordance with one or more implementations.
FIG. 12 illustrates an example social graph in accordance with one or more implementations.

### DETAILED DESCRIPTION

This disclosure describes one or more embodiments of a shared augmented reality (AR) video call system that establishes an augmented reality data channel to enable shared augmented reality video calls which facilitate the sharing of and interaction with augmented reality elements during video calls between a plurality of client devices. In particular, in one or more embodiments, the shared AR video call system establishes a video data channel and an AR data channel for a video call between client devices. Indeed, in one or more embodiments, the shared AR video call system enables client devices that are conducting a video call to transmit (or share) AR data through the AR data channel such that the video call facilitates shared AR elements and/or interactive AR objects to enable shared AR environment scenes, AR effects, and/or AR-based games during a video call between a plurality of client devices.

In one or more embodiments, the shared AR video call system establishes (or utilizes) an multi-peer application programming interface (API) for a shared AR video call that enables client devices to transmit (and receive) AR data in addition to video and audio data during the video call. For instance, the shared AR video call system enables participant client devices to transmit (and receive) AR identifiers that provide instructions (or other information) to cause the rendering of one or more AR elements within a captured video of a client device through the AR data channel. In some cases, the shared AR video call system enables participant client devices to transmit (and receive) AR obj ect vector data to provide instructions (or other information) that are utilized to determine positioning and/or other spatial information for an AR object when the AR object is being rendered within a captured video of a receiving client device. Furthermore, the shared AR video call system also enables participant client devices to transmit (and receive) AR data such as, but not limited to, identifiers to designate which video call participant device renders a specific AR element and/or selectors that designate a subject participant client device for a particular AR effect (e.g., a birthday effect that is targeted to a subject participant client device).

In some embodiments, the shared AR video call system establishes a shared AR video call that enables client devices to transmit (and receive) AR data during a video call to create or render shared AR environment scenes across the video call. For example, the shared AR video call system can enable participant client devices to transmit (and receive) AR identifier data such that the participant client devices each render a shared AR environment scene while conducting a video call. For example, when a participant client device initiates an AR-based environment scene during a video call, the participant client device transmits AR data to one or more other client devices on the video call. Then, the receiving one or more other client devices utilize the AR data to render the AR-based environment scene within their respective captured videos. By doing so, the participating client devices in the video call render an AR environment scene that is cohesive within the videos of each individual participating client device of the video call.

In some cases, the shared AR video call system also enables the participant client devices to interact with the AR environment scene and/or objects in the AR environment scene such that the interactions are reflected within the AR environment scenes of one or more of the individual participating client devices. For example, upon interacting with an AR element in a captured video of a first participant client device, the first participant client device can render a modified AR element (due to the interaction) and also transmit AR data for the interaction with the AR element to a second participating client device of the video call. When the second participating client device receives the AR data through the AR data channel of the video call, the second participating client device can render the modified AR element to account for the interaction taken place on the first participating client device.

Additionally, in some embodiments, the shared AR video call system enables AR objects to move or transition between an AR environment scene in a video call between a plurality of participant client devices. For instance, a first participant client device can render a first captured video with an AR object in the first captured video. Then, the first participant client device can detect that the AR object in the first captured video is moving to a position that is out of the viewing frame of the first captured video. The first participant client device can transmit AR data via the AR data channel that includes information for the AR object, an object vector for the AR object, and a participant identifier for the AR object (e.g., to indicate which participant client device will render the AR object). Then, a second participant client device on the video call can receive the AR data through the AR data channel to render the AR object within a second captured video of the second participant client device utilizing the information for the AR object, an object vector for the AR object, and a participant identifier for the AR object.

Furthermore, in some embodiments, the shared AR video call system enables participant client devices to interact with AR activities during a video call. For instance, the participant client devices render and interact with AR objects between the plurality of client devices for one or more AR activities (e.g., an AR-based game) during a video call by utilizing the AR data channel (established by the shared AR video call system). As an example, a first participant client device can render an AR object as part of an AR game (e.g., a hockey puck, a table tennis ball) within a first video of the first participant client device. Then, in one or more embodiments, the first participant client device can detect a user interaction that modifies the AR object (e.g., moves the hockey puck, moves the table tennis ball) and transmit AR data to a second participant client device for the modified AR object. Subsequently, the second participant client device can detect that the AR object is transitioning to a second video captured by the second participant client device and render the AR object within the second participant client device (e.g., receiving a hockey puck that is hit towards the user of the second participant device, receiving a table tennis ball that is hit towards the user of the second participant device). Indeed, the first and second participant devices can move the AR object between the devices during the video call to interact with an AR-based game.

In addition, the shared AR video call system can enable participant client devices to send (and render) AR effects to other participant client devices in a video call. For instance, a first participant client device can receive a selection of an AR effect and transmit AR identifier data for the AR effect to a second participant client device via the AR data channel. Then, the second participant device can receive the AR identifier data for the AR effect and render the AR effect on a second captured video of the second participant device. In particular, in one or more embodiments, the second participant device can render the AR effect to interact with a user portrayed in the second captured video (e.g., an AR object depicting a birthday hat being worn by the portrayed user, an AR object depicting an animated character sitting on the shoulder of the portrayed user).

As mentioned above, the shared AR video call system provides many technical advantages and benefits over conventional systems. For instance, the shared AR video call system can establish and enable dynamic and flexible video calls between a plurality of participant devices that include shared and interactive AR content. Indeed, unlike many conventional video calling systems that are limited to rendering AR effects selected by a participant device for a captured video and streaming the captured video portraying the non-interactive (overlayed) AR effect to other client devices, the shared AR video call system enables participant devices to initiate AR effects (and/other AR elements) that cause other participant devices on a video call to also render shared AR effects.

As an example, by utilizing an AR data channel between the plurality of participant devices during a video call, the shared AR video call system enables the plurality of participant devices to share AR data (e.g., AR elements and spatial and attributes corresponding to the AR elements) between the plurality of participant devices. By enabling the sharing of AR data during a video call, the shared AR video call system facilitates a wide variety of AR effects and elements within video calls. For example, the shared AR video call system enables AR elements to flow freely between renderings of the captured videos from a plurality of participant devices while also being responsive to interactions detected by the plurality of participant devices.

In addition to the increased flexibility and functionality of AR elements across a plurality of participant devices during a video call, the shared AR video call system also accurately enables the sharing and interaction of AR elements during the video call. For example, by utilizing an AR data channel with a client device layer that filters and obtains AR data transmitted via the AR data channel during a video call, individual participant devices can render AR data using a fully captured video with other information (e.g., a non-compressed video that includes face tracking information and camera depth information) during the video call even when the AR effect is initiated by another client device. Additionally, due to the utilization and filtering of the AR data from the AR data channel, a participant device can efficiently receive AR data within a video call without the participant devices being flooded with data from the video call channels while a transmitting participant device transmits AR data in real time without determining or identifying recipient participant devices.

As illustrated by the foregoing discussion, the present disclosure utilizes a variety of terms to describe features and benefits of the shared AR video call system. Additional detail is now provided regarding the meaning of these terms. For instance, as used herein, the term "video call" refers to an electronic communication in which video data is transmitted between a plurality of computing devices. In particular, in one or more embodiments, a video call includes an electronic communication between computing devices that transmits and presents videos (and audio) captured on the computing devices.

As used herein, the term "channel" refers to a medium or stream utilized to transfer data (e.g., data packets) between client devices and/or a network. In some cases, the term "video data channel" can refer to a medium or stream utilized to transfer video data between client devices and/or a network. Indeed, the video data channel can enable the transfer of a continuous stream of video data between client devices to display a video (e.g., a collection of moving image frames). In some cases, a video data channel can also include audio data for the captured video. In addition, the term "audio data channel" can refer to a medium or stream utilized to transfer audio data between client devices and/or a network that enables the transfer of a continuous stream of audio between client devices to play audio content (e.g., a captured recording from a microphone of a client device).

Additionally, as used herein, the term "augmented reality data channel" refers to a medium or stream utilized to transfer AR data between client devices and/or a network (for a video call). For example, the term "augmented reality data channel" can enable the transfer of a continuous stream (and/or a situational transmission and/or request) of AR data between client devices to communicate AR content and interactions with AR content between the client devices (e.g., AR elements, AR environment scenes, interactions with AR, AR object vectors). In some cases, the shared AR video call system utilizes data-interchange formats such as JavaScript Object Notation (JSON), real time protocol (RTP), and/or extensible markup language (XML) to write, transmit, receive, and/or read AR data from the AR data channel.

As used herein, the term "augmented reality element" (sometimes referred to as an "augmented reality object") refers to visual content (two dimensional and/or three dimensional) that is displayed (or imposed) by a computing device (e.g., a smartphone or head mounted display) on a video (e.g., a live video feed) of the real world (e.g., a video capturing real world environments and/or users on a video call). In particular, the term "augmented reality element" can include a graphical object, digital image, digital video, text, and/or graphical user interface displayed on (or within) a computing device that is also rendering a video or other digital media. For example, an augmented reality element can include a graphical object (e.g., a three dimensional and/or two dimensional object) that is interactive, manipulatable, and/or configured to realistically interact (e.g., based on user interactions, movements, lighting, shadows) with an environment (or person) captured in a video of a computing device. Indeed, in one or more embodiments, an AR element can modify a foreground and/or background of a video and/or modify a filter of a video.

As used herein, the term "augmented reality identifier" refers to information that references or addresses a particular AR element. In particular, the term "augmented reality identifier" can include a value (e.g., numerical, alphanumerical, address, API call) that references a particular AR element. For instance, upon receiving an AR identifier, a participant device can utilize the AR identifier to retrieve and/or identify a particular AR element from storage and/or library of AR elements (e.g., downloaded on the participant device and/or accessible on a cloud service during the video call).

Additionally, as used herein, the term "augmented reality environment scene" refers to one or more augmented reality elements that are interactive, manipulatable, and/or configured to realistically interact with each other and/or user interactions detected on a computing device. In some embodiments, an augmented reality environment scene includes one or more augmented reality elements that modify and/or portray a graphical environment in place of a real world environment captured in a video of a computing device. As an example, the shared AR video call system can render an augmented reality environment scene to portray one or more participants of a video call to be within a graphical environment (e.g., in space, underwater, at a campfire, in a forest, at a beach) within a captured video of a computing device. In some cases, the shared AR video call system further enables augmented reality elements within the augmented reality environment scene to be interactive, manipulatable, and/or configured to realistically interact to user interactions detected on a plurality of participant devices.

Moreover, as used herein, the term "augmented reality effect" refers to one or more augmented reality elements that present (or display) an interactive, manipulatable, and/or spatially aware graphical animation. In particular, the term "augmented reality effect" can include a graphical animation that realistically interacts with a person (or user) captured within a video such that the graphical animation appears to realistically exist in the environment of the person within the captured video. As an example, an augmented reality effect can include graphical confetti, graphical hats worn by video call participants, modifications to persons captured within the video call (e.g., wearing a mask, change to appearance of a participating user on a video call, change to clothing, an addition of graphical accessories).

As further used herein, the term "augmented reality object vector" refers to a collection of data that represents spatial information for an AR element (e.g., a graphical AR object). In particular, the term "augmented reality object vector" can include a directional value (e.g., a two-dimensional and/or three-dimensional coordinate, angles) and/or a magnitude value (e.g., representing a velocity and/or acceleration). Indeed, in one or more embodiments, the shared AR video call system utilizes an AR object vector to determine a direction of movement for an AR element.

As further used herein, the term "participant identifier" refers to a value that points to or uniquely identifies a participant device (or participant) within an electronic communication (e.g., a video call). For example, the shared AR video call system utilizes a participant identifier to determine a recipient participant device for a transmitted AR identifier or AR element. In some instances, a participant device includes a participant identifier with an AR element or identifier to designate a subject participant device when the AR element or identifier is transmitted. Subsequently, the subject participant device can detect the participant identifier and, as a result, utilize the AR element or identifier to render an AR environment within a captured video (e.g., upon determining that the participant identifier matches an identifier assigned to the subject participant device).

As further used herein, the term "user interaction" refers to an action or input detected by a participant device via a camera, touch screen, and/or computer peripheral (e.g., mouse, keyboard, controller). In some cases, the term "user interaction" includes a user input that interacts with a displayed AR element. Furthermore, the term "user interaction" can include a movement interaction detected by a camera of a client device. For example, a movement interaction can include a physical movement of a user (e.g., a face movement, an arm movement, a leg movement) detected by a camera that intersects (or relates to) a position of an AR element. As an example, a movement interaction can include, but is not limited to, detecting, using a client device camera, a user taps an AR element, swat an AR element, kick an AR element. Additionally, a movement interaction can include, but is not limited to, detecting, using the client device camera, eyes of a user opening, a user taking an action to blow air at an AR-based object (e.g., blowing out an AR-based candle, blowing away AR-based leaves) and/or a user taking an action to bite an AR-based object (e.g., eating AR-based food, moving an AR-based object using head movements).

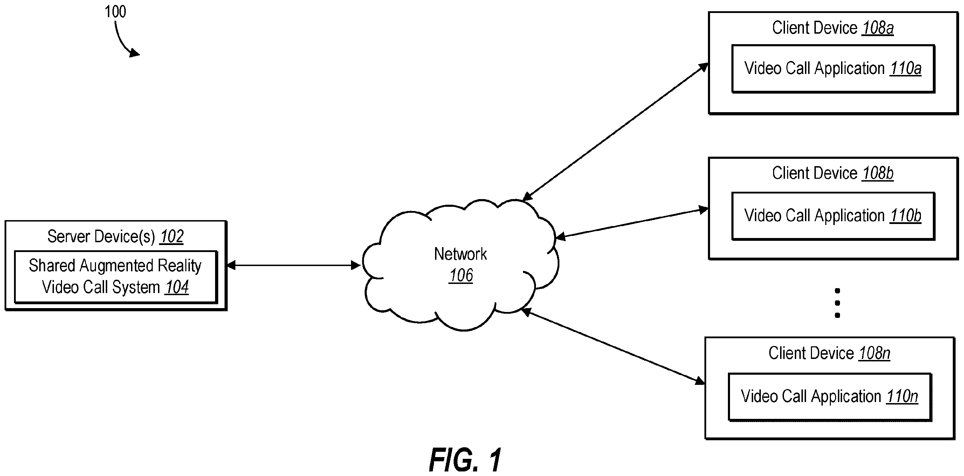

Additional detail regarding the shared AR video call system will now be provided with reference to the figures. For example, FIG. 1 illustrates a schematic diagram of an exemplary system environment ("environment") 100 in which a shared augmented reality video call system 104 (also referred to as a "shared AR video call system 104") can be implemented. As illustrated in FIG. 1, the environment 100 includes a server device(s) 102, a network 106, and client devices 108a, 108b-108n.

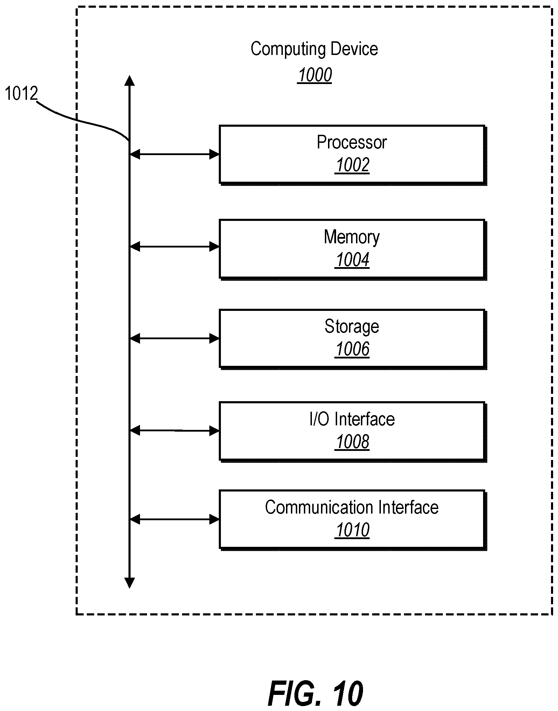

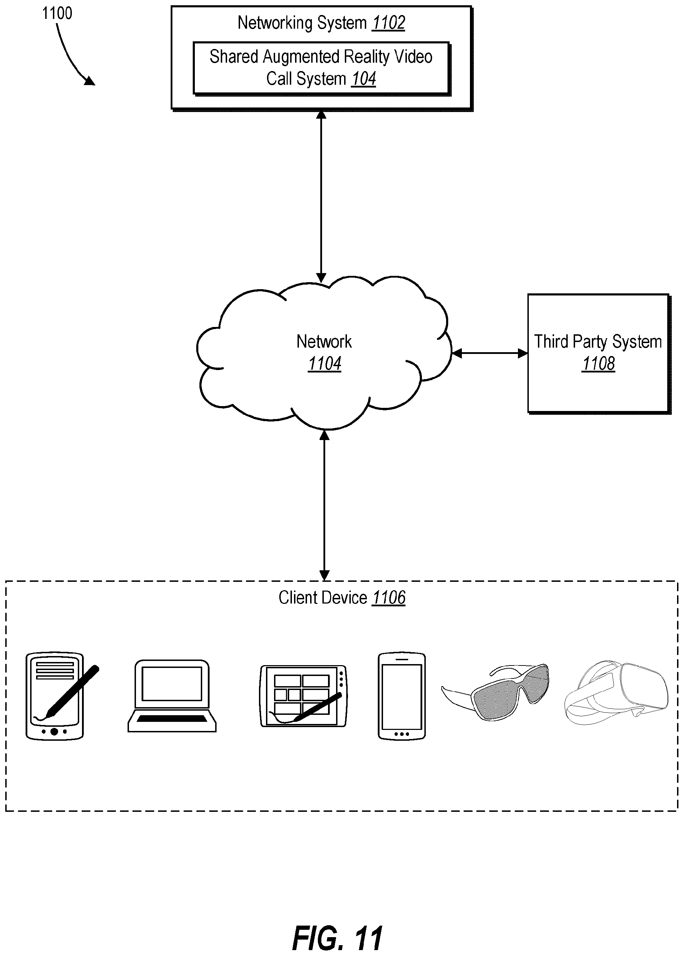

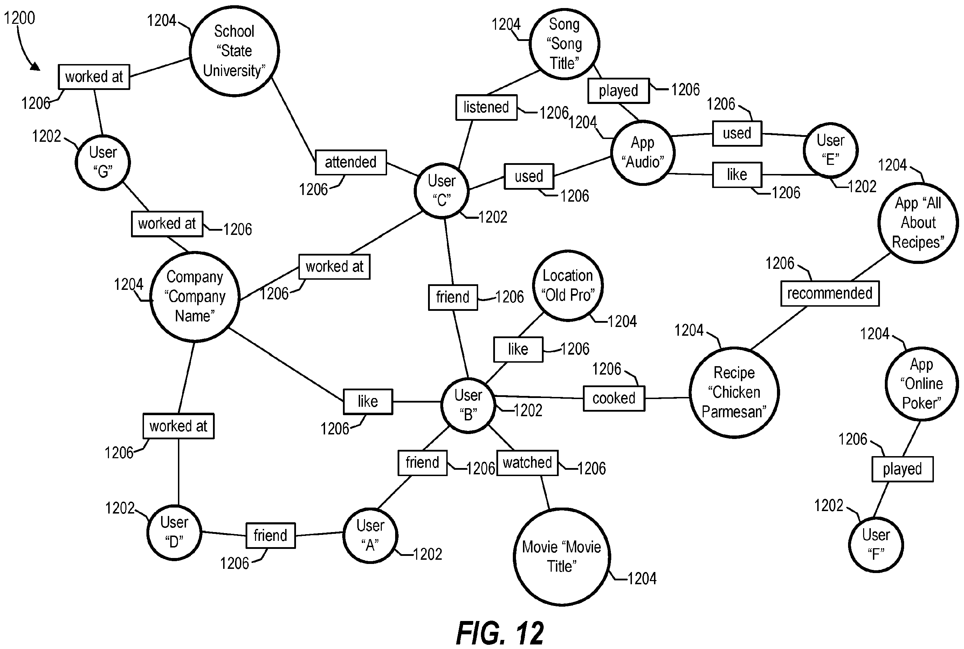

Although the environment 100 of FIG. 1 is depicted as having a particular number of components, the environment 100 can have any number of additional or alternative components (e.g., any number of server devices and/or client devices in communication with the shared AR video call system 104 either directly or via the network 106). Similarly, although FIG. 1 illustrates a particular arrangement of the server device(s) 102, the network 106, the client devices 108a, 108b-108n, various additional arrangements are possible. The server device(s) 102, the network 106, and the client devices 108a, 108b-108n may be communicatively coupled with each other either directly or indirectly (e.g., through the network 106 discussed in greater detail below in relation to FIGS. 11 and 12). Moreover, the server device(s) 102 and the client devices 108a, 108b-108n may include a variety of computing devices (including one or more computing devices as discussed in greater detail with relation to FIG. 10).

As mentioned above, the environment 100 includes the server device(s) 102. In one or more embodiments, the server device(s) 102 generates, stores, receives, and/or transmits digital data, including digital data related to video data and AR data for video calls between client devices (e.g., client devices 108a, 108b-108n). In some embodiments, the server device(s) 102 comprises a data server. In one or more embodiments, the server device(s) 102 comprises a communication server or a web-hosting server.

As further shown in FIG. 1, the server device(s) 102 includes the shared AR video call system 104. In one or more embodiments, the shared AR video call system 104 establishes a video data channel and an AR data channel between client devices to enable a video call with shared AR elements between the client devices. Indeed, in one or more embodiments, the shared AR video call system 104 establishes a video call with interactive shared AR elements between various numbers of client devices from the client devices 108a, 108b-108n. Furthermore, in one or more embodiments, the shared AR video call system 104 is implemented as part of a social networking system that facilitates electronic communications such as instant messaging, video calling, and/or social network posts (e.g., as discussed in greater detail with relation to FIGS. 11 and 12).

Moreover, in one or more embodiments, the environment 100 includes the client devices 108a, 108b-108n. For example, the client devices 108a, 108b-108n can include computing devices that are capable of interacting with the shared AR video call system to conduct video calls (and/or) other electronic communications with one or more other client devices. Indeed, the client devices 108a, 108b-108n can capture videos from digital cameras of the client devices 108a, 108b-108n and further utilize AR data from an AR data channel of a video call to render AR elements within the captured videos. In some implementations, the client devices 108a, 108b-108n include at least one of a smartphone, a tablet, a desktop computer, a laptop computer, a head mounted display device, or other electronic device.

Additionally, in some embodiments, each of the client devices 108a, 108b-108n is associated with one or more user accounts of a social network system (e.g., as described in relation to FIGS. 11 and 12). In one or more embodiments, the client devices 108a, 108b-108n include one or more applications (e.g., the video call applications 110a, 110b-110n) that are capable of interacting with the shared AR video call system 104, such as by initiating video calls, transmitting video data and/or AR data, and/or receiving video data and/or AR data). In addition, the video call applications 110a, 110b-110n are also capable of utilizing video call data and/or AR data to render AR elements within a captured video of a user operating the client device. In some instances, the video call applications 1 10a, 11 0b-11 0n include software applications installed on the client devices 108a, 108b-108n. In other cases, however, the video call application 110a, 11 0b-11 0n includes a web browser or other application that accesses a software application hosted on the server device(s) 102.

The shared AR video call system 104 can be implemented in whole, or in part, by the individual elements of the environment 100. Indeed, although FIG. 1 illustrates the shared AR video call system 104 implemented with regard to the server device(s) 102, different components of the AR video call system 104 can be implemented by a variety of devices within the environment 100. For example, one or more (or all) components of the shared AR video call system 104 can be implemented by a different computing device (e.g., one of the client devices 108a, 108b-108n) or a separate server from the server device(s) 102.

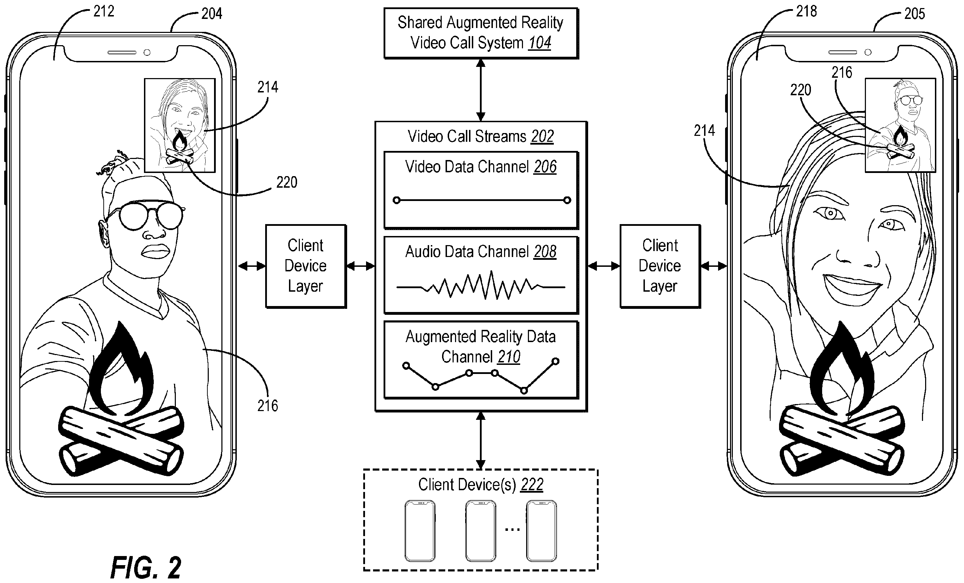

As mentioned above, the shared AR video call system 104 can establish an AR data channel to enable shared AR video calls which facilitate the sharing of and interaction with AR elements during video calls between a plurality of client devices. For example, FIG. 2 illustrates an example of the shared AR video call system 104 establishing and facilitating a shared AR video call between participant devices. As shown in FIG. 2, the shared AR video call system 104 establishes a video call stream 202 between a client device 204 and a client device 205. Indeed, as further illustrated in FIG. 2, the shared AR video call system 104 establishes the video call stream 202 to include a video data channel 206, an audio data channel 208, and an AR data channel 210.

As illustrated in FIG. 2, the client device 204 displays, within a digital video call interface 212, both a video 214 captured by the client device 204 and a video 216 that is captured by the client device 205 (and transmitted to the client device 204 via the video data channel 206). Likewise, as shown in FIG. 2, the client device 205 displays, within a digital video call interface 218, both the video 216 captured by the client device 205 and the video 214 that is captured by the client device 204 (and transmitted to the client device 205 via the video data channel 206). In some cases, the client device 204 and the client device also transmit audio data from audio captured on the respective client devices through the audio data channel 208.

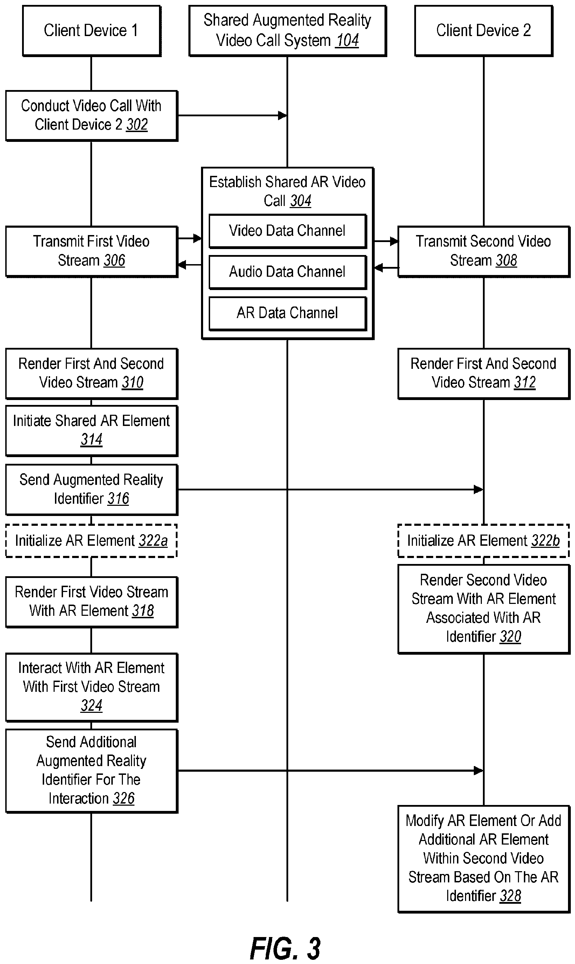

As further shown in FIG. 2, the client device 204 and the client device 205 utilize the AR data channel 210 to transmit (and receive) AR data between the client devices to render shared AR elements during a video call. As shown in FIG. 2, both client devices 204 and 205 render an AR element 220 that is shared during the video call. In one or more embodiments, the client devices 204 and 205 can interact with (and/or move) the shared AR element 220 between the client devices 204 and 205 as described below (e.g., in reference to FIGS. 3-8).

As shown in FIG. 2, the client device 204 renders the AR element 220 on the captured video 214. Then, the client device 204 transmits the captured video 214 with the rendered AR element 220 to the client device 205. Likewise, as illustrated in FIG. 2, the client device 205 renders the AR element 220 on the captured video 216. Subsequently, the client device 205 transmits the captured video 216 with the rendered AR element 220 to the client device 204. By rendering AR elements locally, the client devices can utilize non-compressed captured videos that include video sensor data such as, but not limited to, depth information, face tracking information, and/or other body movement tracking information.

In some embodiments, the shared AR video call system 104 utilizes an AR data channel to facilitate a real time transfer of AR data during a video call. For example, during a video call, the shared AR video call system 104 can establish an AR data channel that facilitates that transmission (and reception) of additional data (e.g., in addition to video and audio data) during a video call to share interactive AR environments, AR effects, AR-based activities, and/or individual AR elements during a video call. For instance, the shared AR video call system 104 can enable client devices to transmit AR data such as AR identifiers (e.g., that point to AR elements), AR elements, AR object vectors (for positions and directions of AR elements), user interactions with AR elements, modifications to AR elements, and/or other updates corresponding to AR environments, AR effects, AR-based activities, and/or individual AR elements during a video call.

In some cases, the shared AR video call system 104 establishes the AR data channel to utilize one or more data-interchange formats to facilitate the transmission of AR data within the AR data channel. For example, the shared AR video call system 104 can enable the AR data channel to transmit AR data in formats such as, but not limited to JSON, plain text, and/or XML. In addition, in one or more embodiments, the shared AR video call system 104 establishes the AR data channel utilizing an end-to-end network protocol that facilitates the streaming of real time data to stream AR data between a plurality of client devices. For instance, the shared AR video call system 104 can enable the AR data channel to transmit AR data via end-to-end network protocols such as, but not limited to Real-Time Transport Protocol (RTP), real time streaming protocol (RTSP), real data transport (RDT), and/or another data sync service.

Furthermore, in one or more embodiments, the shared AR video call system 104 provides an application programming interface (API) to one or more client devices to communicate with each other and the shared AR video call system 104 during a video call. In particular, the shared AR video call system 104 can provide an API that includes calls to communicate requests, transmissions, and/or notifications for AR data across an AR data channel established by the shared AR video call system 104. For example, a client device can utilize an API to communicate with the shared AR video call system 104 to request AR effects (or other AR data) to initialize AR environments, AR effects, AR-based activities, and/or individual AR elements transmitted during a video call. Additionally, a client device can utilize an API to communicate AR data through the AR data channel to other client devices during a video call. Indeed, the shared AR video call system 104 can utilize an API to facilitate communication between the shared AR video call system 104 and one or more client devices to share AR data during a video call to create AR environments, AR effects, AR-based activities, and/or individual AR elements during the video call in accordance with one or more embodiments herein.

For example, in one or more embodiments, the shared AR video call system 104 utilizes JSON formatted message broadcasting via the AR data channel between the plurality of client devices to communicate AR data. In particular, the shared AR video call system 104, during a video call, establishes a data message channel capable of transmitting JSON formatted messages as the AR data channel. Indeed, the shared AR video call system 104 can establish a data message channel that persist during one or more AR effect during the video call. In addition, the shared AR video call system 104 can establish the data message channel as a named, bidirectional communication data channel that facilitates requests to transmit AR data and requests to receive AR data.

Furthermore, in one or more embodiments, the shared AR video call system 104 utilizes a JSON formatted message as a JSON object that includes one or more accessible values. In particular, the JSON object can include one or more variables and/or data references (e.g., via Booleans, strings, numbers) that can be accessed via a call to the particular variable. Indeed, the shared AR video call system 104 can facilitate the transmission and reception of JSON objects that are accessed to determine information such as AR identifiers, AR effect length, AR object vectors, and/or participant identifiers.

Moreover, in some embodiments, the shared AR video call system 104 establishes a data message channel (as the AR data channel) to include a data stream enabled for client device subscription. For example, the shared AR video call system 104 can receive a request to subscribe to an AR data channel from a client device. Then, the shared AR video call system 104 enables the client device to listen for data messages transmitted (or broadcast) over the data stream.

Additionally, the shared AR video call system 104 can establish an AR data channel that utilizes a real time asynchronous data channel (async channel). In one or more embodiments, the shared AR video call system 104 establishes an async channel that includes a high throughput and high bandwidth such that data is broadcast to the plurality of client devices in real-time. In some cases, the shared AR video call system 104 establishes the async channel to broadcast AR data (or AR data messages) regardless of message order. In some instances, the shared AR video call system 104 can establish an AR data channel that utilizes a synchronized channel (sync channel). In some embodiments, the shared AR video call system 104 establishes a sync channel that transmits AR data (or AR data messages) in message order to synchronize AR data across the plurality of client devices.

Moreover, the shared AR video call system 104 can establish an AR data channel that transmits AR data having one or more logic data objects (e.g., multi-peer data patches) that provide instructions to execute an AR effect during a video call. In one or more embodiments, the shared AR video call system 104 enables the plurality of client devices on a video call to package and/or send the logic data objects, receive a logic data object, unpack a logic data object to access the logical instructions to execute an AR effect, and/or configure a duration and/or timing for the packing, sending, receiving, and/or unpacking event of the logical data object.

In certain instances, the shared AR video call system 104 generates a logic data object that includes numerical, Boolean, text, or vector (e.g., vector2, vectors, vector4) data of an instance of an AR effect as AR data that is transmitted via an AR data channel. Indeed, the logic data object can include a key (e.g., to identify or represent the AR data being sent), participant identifiers (e.g., to identify one or more selected subject participants from the video call), and/or an identifier for the AR data channel (e.g., where the logic data object will be sent).

In one or more embodiments, the shared AR video call system 104 enables a client device to transmit multiple logic data objects as AR data to represent various components of an AR effect. For example, a first logic data object can represent selected participants of a video call as subject participants for the AR effect. In addition, a second logic data object can represent positional data (e.g., an object vector or specific object selection for position) for the AR effect. As an example, the positional data can include an object vector for a direction or a specific object selection such as, but not limited to, a face tracker selection, an eye tracker selection, and/or a nose tracker selection. Indeed, the shared AR video call system 104 can enable a client device to transmit various combinations of logic data objects to render various combinations of shared AR effects on another client device during a video call.

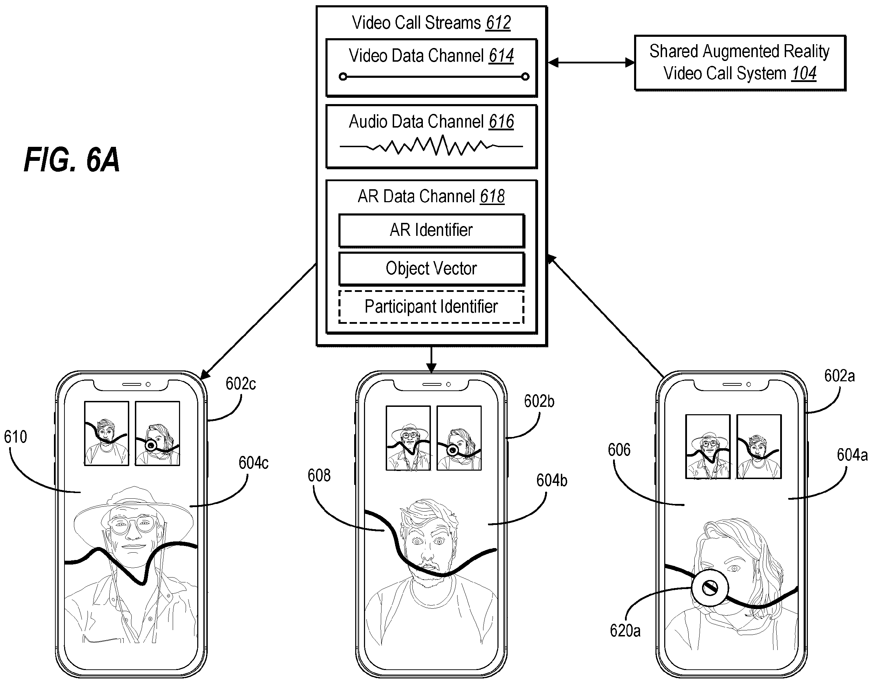

In addition, the logic data object can include one or more AR element identifiers to designate one or more AR elements to render. Furthermore, the logic data object can include modifiers, timers, and/or actions that designate the duration (e.g., a throttle object) and/or specific rendering instructions (e.g., a position, a speed, a quantity) for an AR element. Additionally, the logic data object can also include one or more links that temporally and/or logically connect the various information and/or instructions within the logic data object such that a client device can utilize the temporal and/or logical links to determine how to render an AR object. Indeed, the shared AR video call system 104 can utilize logic data objects as AR data to implement one or more of the shared AR effects during a video call as described in greater detail below (e.g., in relation to FIGS. 6A-6D).

To illustrate an example of the shared AR video call system 104 utilizing a logic data object to enable a shared AR effect during a video call, the shared AR video call system 104 can enable a first client device to detect a kiss action from a participant on a first client device during a video call such that a second client device receives an AR data object (that includes a logic data object) that causes the second client device to render an AR heart (e.g., an AR element) on the nose of participant captured on the second client device. Indeed, the shared AR video call system 104 can, as part of an AR effect, detect a participant captured on a first client device making a kiss action (e.g., using a face tracker component on the video call).

Upon detecting the kiss action, the first client device can detect the number of kisses and generate a logic data object that includes an identifier for the kiss event (e.g., an AR identifier that instructs to render an AR effect for the kiss event) and a counter for the number of kisses. Then, the first client device can transmit the logic data object via an AR data channel to a second client device. Moreover, the second client device can unpack the logic data object to identify the identifier for the kiss event and the counter.

As part of the logic data object, the second client device can also identify instructions for a duration corresponding to the AR effect, an identifier for the AR element, and instructions to render the AR element (e.g., a throttle object). As such, the second client device can render the AR element identified by the logic data object (e.g., the AR heart) for the designated duration and the designated number of times (based on the counter) at a designated position (e.g., via an instruction to track a nose or other feature of the participant on the second client device, a static position within the captured video of the second client device).

In some cases, as shown in FIG. 2, a client device includes a client device layer for the video call streams established by the shared AR video call system 104. In particular, a client device can utilize a client device layer (e.g., a layer within an API and/or a network protocol) that controls the transmission and/or reception of AR data via the AR data channel. For instance, a client device can utilize a client device layer to receive and filter AR data that is broadcast (or transmitted) via the AR data channel from one or more client devices participating in a video call. In particular, in one or more embodiments, client devices transmit AR data via the AR data channel to each client device participating on a (same) video call. Moreover, a client device can identify the transmitted AR data utilizing a client device layer and filter the AR data (e.g., to utilize or ignore the AR data). For instance, a client device can utilize a client device layer to filter AR data based on participant identifiers corresponding to the AR data (as described below).

As shown in FIG. 2, in some cases, the shared AR video call system 104 can enable a shared AR video call between a plurality of client devices. For example, as illustrated in FIG. 2, the shared AR video call system 104 can establish the video call streams 202 (e.g., the video data channel 206, the audio data channel 208, and the AR data channel 210) between the client device 204, the client device 205, and one or more of the client devices 222. Indeed, upon transmitting AR data through the AR data channel 210, the client device 204, the client device 205, and the one or more of the client devices 222 can render shared AR elements to create a shared AR environment scene, an AR activity, and/or an AR effect (in accordance with one or more embodiments herein) within a video call between the plurality of client devices.

Indeed, as mentioned above, in one or more embodiments, the shared AR video call system 104 establishes an AR data channel to transfer (or communicate) AR data during a video call to create interactive and free flowing AR elements within a video call between a plurality of client devices. FIG. 3 illustrates a flow diagram of the shared AR video call system 104 establishing an AR data channel and client devices utilizing the AR data channel to communicate AR data (and render AR elements) during a video call. For example, as shown in FIG. 3, the shared AR video call system 104 receives, in an act 302, a request to conduct a video call with a client device 2 from a client device 1 (e.g., a request to initiate a video call). Then, as shown in act 304 of FIG. 3, the shared AR video call system 104 establishes a shared AR video call between the client device 1 and the client device 2 (e.g., which includes a video data channel, an audio data channel, and an AR data channel).

Then, as shown in act 306 of FIG. 3, the client device 1 transmits a first video stream (e.g., a video stream captured on the client device 1) to the client device 2 through the video data channel and the audio data channel. As further shown in act 308 of FIG. 3, the client device 2 transmits a second video stream (e.g., a video stream captured on the client device 2) to the client device 1 through the video data channel and the audio data channel. Furthermore, as shown in act 310 of FIG. 3, the client device 1 renders the first and second video stream. Likewise, as shown in act 312 of FIG. 3, the client device 2 also renders the first and second video stream.

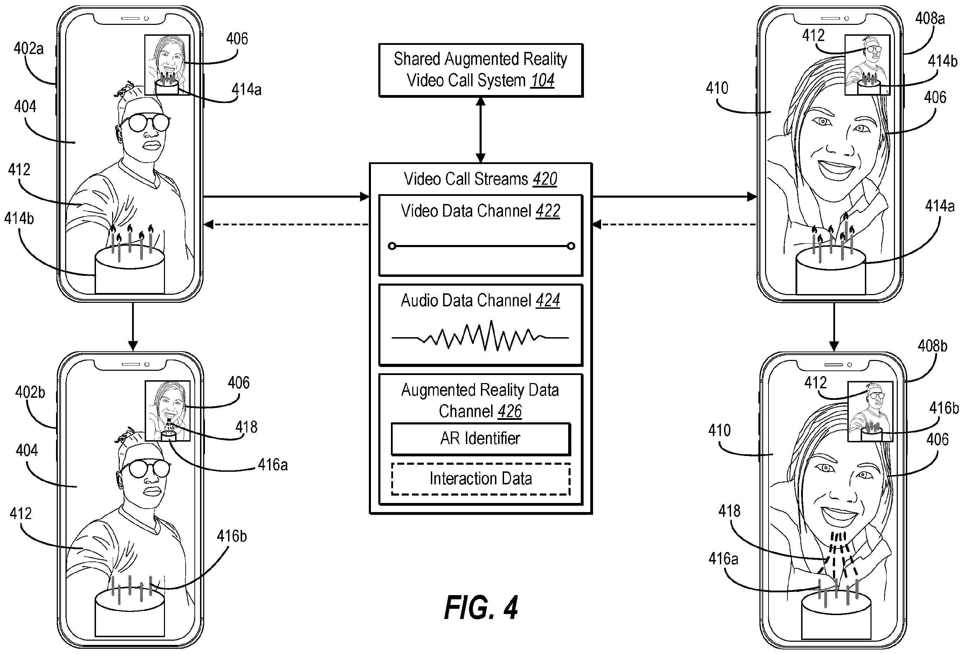

As further shown in act 314 of FIG. 3, the client device 1 initiates a shared AR element within the first video stream of the client device 1. In addition, as shown in act 316 of FIG. 3, the client device 1 sends (or transmits) an AR identifier for the AR element (via the AR data channel) to the client device 2. Furthermore, as shown in act 318 of FIG. 3, the client device 2 renders the first video stream with the AR element. In response to receiving the AR identifier, the client device 2, as shown in act 320 of FIG. 3, renders the second video stream with the AR element associated with the received AR identifier. Indeed, the video streams of both the client 1 and the client 2 locally render a shared AR element to create a shared AR environment scene, AR activity, and/or AR effect as described below (e.g., in relation to FIGS. 4-8).

In some embodiments, the devices initialize an AR element prior to rendering the AR element when sharing an AR element across an AR data channel. In particular, as shown in act 322a and act 322b of FIG. 3, the client devices both initialize the AR element prior to rendering the AR element. In one or more embodiments, one or more client devices receive an AR identifier and wait until each client device initializes the AR element to synchronize the shared AR experience across the multiple client devices on the video call. Indeed, upon initializing, the client devices can transmit (through the AR data channel) to other client devices a message indicating that the client device is ready to render the AR element (or has initialized the AR element). In some cases, a client device can initialize an AR element by retrieving the AR element, loading the AR element, and/or downloading a particular AR data package to render the AR element. Upon receiving an initialized message from each client device on a video call, individual client devices can continue to render the AR element.

Furthermore, in one or more embodiments, the client devices (or the shared AR video call system 104) pause the one or more video streams of the video call until initialization of a shared AR element is complete on each of the participating client devices. In some cases, the shared AR video call system 104 streams (or displays) a loading screen (or loading animation) until the AR element is initialized on each of the participating client devices. Additionally, in one or more embodiments, the shared AR video call system 104 enables the client devices to continue to transmit and/or receive audio data via the audio data channel and play audio of one or more client devices on the video call while the AR elements initialize on the plurality of client devices.

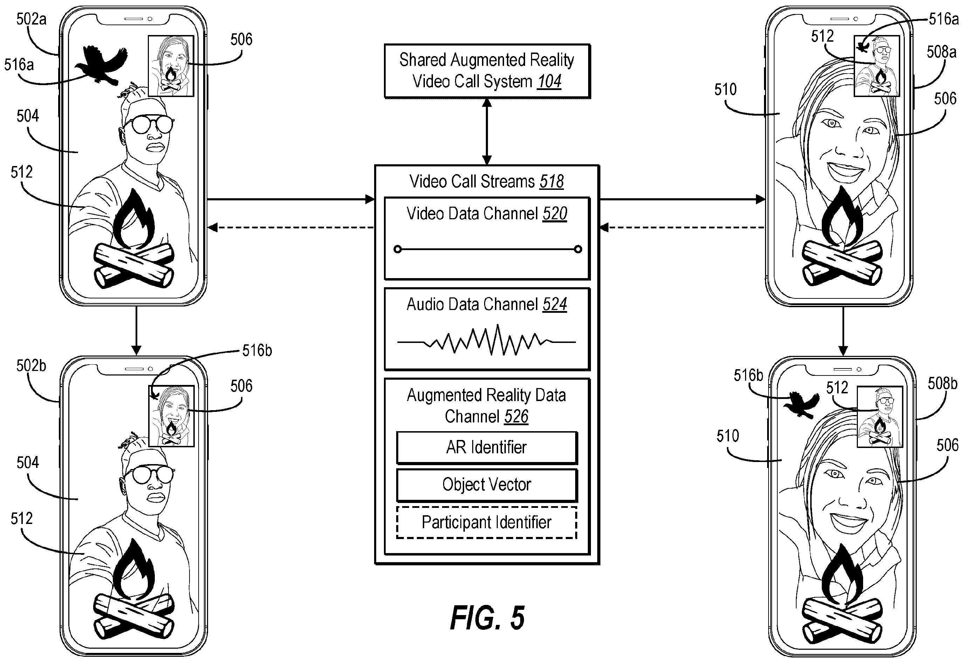

As further shown in act 324 of FIG. 3, the client device 1 interacts with the AR element within the first video stream (i.e., the video stream captured by the client device 1). Upon interacting with the AR element, the client device 1 also transmits an additional AR identifier for the interaction (as shown in act 326 of FIG. 3) to the client device 2. Then, as shown in act 328 of FIG. 3, the client device 2 receives the additional AR identifier and utilizes the information from the AR identifier for the interaction from the client device 1 to modify the AR element (or add an additional AR element) within the second video stream based on the AR identifier (e.g., representing the interaction from the act 324). For example, the client device 2 can modify the AR element as described below (e.g., in relation to FIG. 4). In some cases, the client device 2 utilizes the information from the additional AR identifier to add (or remove) AR elements to (or from) the second video stream as described below (e.g., in relation to FIGS. 5 and 6A-6B).

In one or more embodiments, the client devices (in reference to FIG. 3) can continue to transmit various combinations of data between the client devices on the video call (e.g., through the video data channel, audio data channel, and/or AR data channel). Indeed, the client devices can transmit various combinations of video data, audio data, and/or AR data to render various AR experiences during a video call. Furthermore, although FIG. 3 illustrates a flow diagram of data transmissions between two client devices interacting within a video call, the shared AR video call system 104 can establish a video call to transmit various combinations of video data, audio data, and/or AR data to render various AR experiences during a video call between various numbers of client devices. In addition, one or more of the client devices (participating in a video call) can change an AR environment, activity, and/or effect via selection of a different AR environment, activity, and/or effect during the video call.

As mentioned above, the shared AR video call system 104 establishes a shared AR environment scene during a video call utilizing an AR data channel to transmit AR data between client devices participating in the video call. For example, FIG. 4 illustrates the shared AR video call system 104 establishing a video call with a shared AR environment scene between a plurality of client devices. As shown in FIG. 4, upon receiving a request to initiate a video call from client device 402a (or 408a), the shared AR video call system 104 establishes the video call streams 420 that include a video data channel 422, an audio data channel 424, and an AR data channel 426.

As further shown in FIG. 4, the client device 402a transmits an AR identifier through the AR data channel 426 and renders an AR element 414a within a captured video 406 in a digital video call interface 404. Upon receiving the AR identifier, the client device 408a (as shown in FIG. 4) also renders an AR element 414b within a captured video 412 in a digital video call interface 410. As also shown in FIG. 4, the client devices 402a and 408a also display a video stream to portray the captured video 412 with the AR element 414b and the captured video 406 with the AR element 414a (e.g., as a video call). Indeed, in relation to FIG. 4, the shared AR element creates an AR environment scene having a single cake (e.g., through AR elements 414a and 414b) between the client devices on the video call.

Although one or more embodiments illustrate the shared AR video call system 104 establishing a video call in which the client devices initiate a shared AR environment scene displaying an AR-based cake, the shared AR video call system 104 enables the client devices to transmit various numbers of AR identifiers (for AR elements) to create various shared AR environment scenes on a video call. As an example, in some instances, a client device transmits one or more AR identifiers that reference AR elements for an AR campfire environment within a video call. Indeed, a plurality of client devices on the video call can receive the one or more AR identifiers to render AR elements to create a shared graphical AR campfire within the video call.

As another example, in some cases, a client device transmits one or more AR identifiers that reference AR elements for an AR outer space environment within a video call. As a result, a plurality of client devices on the video call can receive the one or more AR identifiers to render AR elements to create a shared graphical AR outer space environment within the video call (e.g., to situate participants on the video call in the same outer space environment). Moreover, in some embodiments, a client device transmits one or more AR identifiers that reference AR elements for an AR underwater environment within a video call. Indeed, a plurality of client devices on the video call can receive the one or more AR identifiers to render AR elements to create a shared graphical underwater environment within the video call (e.g., to situate participants on the video call in the same underwater environment).

As also mentioned above, the shared AR video call system 104 can enable client devices (or users of client devices) to interact with AR elements within the video call to affect a rendered AR element across one or more of the participating client devices on the video call. For instance, FIG. 4 also illustrates a client device detecting an interaction with an AR element and utilizing the AR data channel to reflect the interaction to AR elements on other client devices of a video call. Indeed, as shown in FIG. 4, the client device 402b (a transitional version of the client device 402a) detects a user interaction 418 (e.g., the captured participant blowing on candles of the AR element 414a representing a cake) within the captured video 406 to render a modified AR element 416a.

Then, as further shown in FIG. 4, the client device 402b transmits the AR identifier with interaction data (to indicate the modified AR element and/or the interaction with the AR element) via the AR data channel 426 to the client device 408b (a transitional version of the client device 402a). Upon receiving the AR identifier representing the modified AR element and/or the interaction with the AR element, the client device 408b also renders the AR element 414b within the captured video 412 to reflect the interaction detected on the client device 402b as a modified AR element 416b.

As also illustrated in FIG. 4, the client devices 402b and 408b display a video stream to portray the captured video 412 with the modified AR element 416b on the client device 402b and the captured video 406 with the modified AR element 416a on the client device 408b (e.g., as a video call). Indeed, as shown in FIG. 4, both client devices 402b and 408b display the modified AR element 416b and 416a (respectively) as cake having extinguished candles due to the user interaction 418 (e.g., movement interaction) that was detected on the captured video 406 on the client device 402b. As shown in FIG. 4, the shared AR video call system 104 establishes a video call in which participating users of the client devices can interact with AR elements such that the interactions create and manipulate a shared AR environment during the video call to create the perception that the video call is taking place in the same physical location (e.g., within the same room or space).

In one or more embodiments, the shared AR video call system 104 enables client devices to detect and transmit various types of interaction data in relation to an AR element. For example, the interaction data can include interaction types such as, but not limited to, hand movements, arm movements, head movements, eye movements, body movements, touch screen input that intersect (and/or interact) with one or more AR elements. In addition, the interaction data can include location data on the AR element at which the interaction occurred (e.g., the portion of the AR element that is interacted with). Indeed, in some embodiments, the interaction data is applied to an AR element to determine a reactionary state of an AR element based on the particular interaction data (e.g., a specific action causes a specific reactionary state of the AR element). Indeed, a client device can receive (via the AR data channel) and utilize the interaction data to determine a reactionary state of an AR element due to the interaction data and render a modified AR element accordingly.

In some instances, a client device can utilize interaction data detected locally to determine a reactionary state of an AR element and render the modified AR element accordingly. Then, the client device can transmit (via the AR data channel) the modified state of the AR element to indicate the modification, location, and/or state of the AR element to other client devices on the video call. Moreover, the other client devices can receive the information for the modified state of the AR element from the AR data channel and render the modified AR element to have a similar state as identified from AR data received via the AR data channel.

In one or more embodiments, the shared AR video call system 104 enables client devices to transmit various types of AR data (for AR identifiers of AR elements) that indicate various interaction data and/or modifications to AR elements to create various shared AR interactive environment scenes on a video call. As an additional example, in some instances, a client device detects hand movements that interact with one or more AR-based balloons (e.g., as AR elements) rendered on a captured video of the client device. In response to the detected hand movements, the client device renders one or more of the AR-based balloons popping (e.g., a modified AR element) on the captured video of the client device. In addition, the client device transmits the interaction (and/or the modified state of the AR-based balloons) to another client device on the video call via an AR data channel. The other client device can receive the AR data and also render the same one or more AR-based balloons popping within a shared AR environment.

As another example, a client device can detect a movement that indicates a video call participant turning a page of an AR-based book that is rendered on a captured video of the client device. Then, the client device can render the AR-based book turning a page while also transmitting the interaction (and/or the modified state of the AR-based book) to another client device on the video call via an AR data channel. The other client device can receive the AR data and also render the same AR-based book turning a page within a shared AR environment for the AR-based book.

In some cases, the shared AR video call system 104 can enable AR elements to be rendered (or appear) in one client device in response to a detection of interaction data on another client device during a video call. For example, a client device can detect interaction data from a participant on a captured video (e.g., hand waving, clapping, blowing a kiss). Then, the client device can transmit the detected interaction data (and additional AR data) through the AR data channel to one or more other client devices participating on the video call. Upon receiving the interaction data (and the additional AR data), the one or more other client devices can render AR elements according to the interaction data and the additional AR data. For example, as mentioned above, upon receiving interaction data for a kiss action, a client device can render an AR element (e.g., an AR heart) at a specified location within a captured video of the client device according to the AR data. As another example, upon receiving interaction data indicating hand clapping on a first client device (and AR data for a resulting AR effect), a second client device can render AR-based fireworks within the captured video of the second client device.

As further mentioned above, the shared AR video call system 104 can enable AR elements to move between client devices of a video call utilizing an AR data channel of the video call. In particular, in one or more embodiments, the shared AR video call system 104 enables an AR element that is rendered in a captured video of a client device to move to (e.g., be rendered by) another captured video of another client device on the video call. For instance, FIG. 5 illustrates the shared AR video call system 104 enabling an AR element to move from one client device to another client device during a video call.

As shown in FIG. 5, the shared AR video call system 104 establishes a video call between a client device 502a and a client device 508a by establishing video call streams 518 that include a video data channel 520, an audio data channel 524, and an AR data channel 526. As shown in FIG. 5, the client device 508a renders an AR element 516a within a captured video 512 on the client device 508a on the digital video call interface 510. Indeed, as shown in FIG. 5, the client device 502a receives video data to display the captured video 512 (from the client device 508a) on a digital video call interface 504 with the AR element 516a.

Additionally, as shown in FIG. 5, the client device 502a also captures a video 506 and displays the captured video 506 within the digital video call interface 504. In addition, as illustrated in FIG. 5, the client device 508a receives video data to display the captured video 506 from the client device 502a) on the digital video call interface 510. As also shown in FIG. 5, the client devices 502a and 508a also render additional AR elements (as described above) for an AR campfire environment scene in the video call.

Moreover, in reference to FIG. 5, the client device 508a can track movement of the AR element 516a within the captured video 512. Then, as shown in FIG. 5, upon detecting that the AR element 516a is exiting (or moving off) a frame of the captured video 512, the client device 508a can transmit AR data indicating the movement of AR element (using an object vector). For example, as shown in FIG. 5, as the AR element 516a moves off screen of the client device 508a, the client device 508b (a transition of the client device 508a) transmits AR data through the AR data channel 526 that includes an object vector and an AR identifier for the AR element 516a. Then, as further shown in FIG. 5, the client device 502b (a transition of the client device 502a) receives the AR data and renders an AR element 516b within the captured video 506 using the AR identifier and the object vector (to correctly position the AR element 516b) to display the AR element 516b entering the frame of the captured video 506.

As also shown in FIG. 5, the client device 502b captures the video 506 with the AR element 516b and displays the captured video 506 within the digital video call interface 504. In addition, as illustrated in FIG. 5, the client device 508b receives video data to display the captured video 506 having the AR element 516b (from the client device 502b) on the digital video call interface 510. Indeed, as illustrated in FIG. 5, the shared AR video call system 104 enables client devices to transmit AR data between the client devices during a video call to move AR elements between the client devices (e.g., an AR bird flying around the video call in different captured videos as shown in FIG. 5).

In one or more embodiments, the shared AR video call system 104 enables the client devices to utilize AR data through the AR data channel to broadcast AR elements to other client devices on a video call. In particular, in some instances, a client device determines that an AR element is exiting a frame of a captured video (e.g., through programed or artificial intelligent based movement of the AR element and/or through movement caused by user interaction with the AR element). Upon determining that an AR element is exiting the frame of the captured video, the client device broadcasts AR data through the AR data channel that informs other client devices on the video call that an AR element is entering a frame (or frames) of a captured video (or captured videos) of the one or more other client devices. Indeed, in one or more embodiments, the one or more other client devices receive the AR data through the AR data channel and render the AR element (e.g., as entering or joining) a captured video (or captured videos) of the one or more other client devices.

In some instances (as mentioned above), a client device can also transmit an object vector with AR data for the broadcasted AR element. Indeed, in one or more embodiments, the object vector includes data to indicate a positioning of the AR element (e.g., where the AR element is entering a frame of a captured video, where the AR element is going to exist in a captured video). In addition, the object vector can also include movement data such as, but not limited to, speed (e.g., a velocity of travel, an acceleration) and/or other trajectory or physic-based data for the movement of the AR element (e.g., a friction coefficient, a centripetal acceleration, a gravity factor for the AR element). Indeed, a receiving client device can utilize an object vector of the AR element to render the AR elements movement to portray a smooth transition from a previous client device captured video to the captured video of the client device.

In some embodiments, the shared AR video call system 104 also enables the client devices on a video call to transmit a participant identifier with the AR data to indicate one or more receiving client devices during a broadcast of an AR element. For instance, when more than two client devices are conducting a video call, a client device transmits (or utilizes) a participant identifier as part of a transmission (or broadcast) of an AR element to designate one or more destination client devices for the AR element. To illustrate, a first client device (during a video call with a second and third client device) can transmit AR data to broadcast (or move) an AR element from the captured video of the first client device to a captured video of a second client device (and not the third client device) by including a participant identifier that addresses the second client device. Indeed, the second and third client devices can filter the AR data from the AR data channel to utilize AR data that corresponds to the correct participant identifier. In some cases, an AR data transmission can include multiple participant identifiers such that multiple client devices based on the multiple participant identifiers render AR elements for the AR data transmission. In some cases, while establishing a video call between client device, the shared AR video call system 104 can assign participant identifiers to each participating client device (e.g., a numerical and/or alphanumerical value.

In some cases, the shared AR video call system 104 enables an AR element to move randomly between client devices during a video call. For instance, the shared AR video call system 104 can (as a controller) include a random identifier selection with AR data for a broadcasted AR element to set a random destination for the broadcasted AR element. For instance, the shared AR video call system 104 can identify AR data within the AR data channel that is broadcasting an AR element from a first client device 1 on a video call between the first client device, a second client device, and a third client device. Then, in one or more embodiments, the shared AR video call system 104 can assign the broadcasted AR element to the third client device such that the third client device renders the AR element while the second client device does not render the AR element (e.g., based on filtering the AR data channel). In certain instances, the shared AR video call system 104 utilizes an array having a randomized list of identifiers for the client devices participating in a video call and selects through the array to randomly assign a broadcasted AR element randomly from one client device to another during a video call.

In one or more embodiments, the shared AR video call system 104 enables client devices to transmit various types of AR data (for AR identifiers of AR elements) that indicate various movements of various AR elements between client devices on a video call. As an example, a client device can transmit AR data via an AR data channel (established by the shared AR video call system 104) to indicate movement of multiple AR-based fishes in an AR underwater environment being shared between client devices on a video call. Indeed, one or more client devices on the video call can receive the AR data indicating the movement of the multiple AR based fishes and render the AR based fishes at a particular location (and/or entering a frame of a captured video on the client devices). Indeed, the shared AR video call system 104 can enable the movement of various AR elements between client devices during a video call through the AR data channel.

As another example, a client device can detect an interaction with a rendered AR element that moves the AR element within the captured video of the client device (e.g., a movement interaction that moves an AR-based cake from left to right on a captured video). In response, the client device broadcasts the movement of the AR element to other client devices on the video call via an AR data channel. Upon receiving the movement information of the AR element, the other client devices can also render the AR-based cake at a new location to match the movement detected on the client device. Indeed, the shared AR video call system 104 can enable the movement of various AR elements such that the movement is mimicked in the AR renderings of other client devices on the video call to create the perception of a shared AR environment.

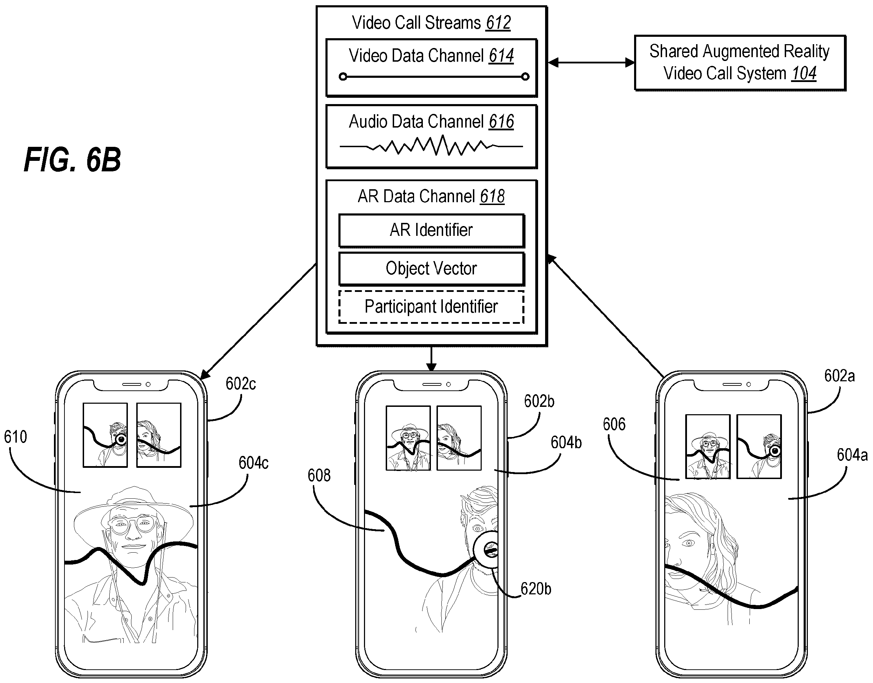

As also mentioned above, the shared AR video call system 104 can enable AR-based activities between client devices during a video call using an AR data channel. For example, FIGS. 6A and 6B illustrate the shared AR video call system 104 enabling an AR-based activity between participant users (through corresponding client devices) of a video call using an AR data channel. As shown in FIG. 6A, the shared AR video call system 104 establishes a video call between a client device 602a, a client device 602b, and a client device 602c by establishing video call streams 612 which includes a video data channel 614, an audio data channel 616, and an AR data channel 618. As further shown in FIG. 6A, the client device 602a captures and displays a video 604a within a digital video call interface 606, the client device 602b captures and displays a captured video 604b within a digital video call interface 608, and the client device 602c captures and displays a video 604c within a digital video call interface 610. In addition, as shown in FIG. 6A, each of the client devices 602a, 602b, and 602c receives video data through the video data channel 614 (and audio data through the audio data channel 616) from the participant client devices to display the client device video streams (e.g., to establish the video call).

Furthermore, as shown in FIG. 6A, the client device 602a renders an AR element 620a (e.g., an AR-based donut) within the captured video 604a (which is also streamed on the client devices 602b and 602c). As further shown in FIG. 6A, the client device 602a detects movement interactions from the participant user captured within the captured video 604a in relation to the AR element 620a. In some embodiments, the client device 602a renders the AR element 620a to move the AR element 620a to follow movement interactions from the participant user captured within the captured video 604a.

As shown by the transition from FIG. 6A to FIG. 6B, the AR element 620a is moved to exit a frame of the captured video 604a in the digital video call interface 606 of the client device 602a. In response, the client device 602a broadcasts, through the AR data channel 618, the AR element 620a utilizing AR data that indicates an AR identifier for the AR element 620a and an object vector for the AR element 620a to move the AR element 620a to another client device on the video call (as described above). In particular, as shown in FIG. 6B, the client device 602b receives AR data through the AR data channel 618 that indicates the AR identifier for the AR element 620a (from FIG. 6A) and an object vector for the position and direction of the AR element 620a and utilizes the AR data to render an AR element 620b entering a frame of the captured video 604b in the digital video call interface 608 on the client device 602b.

As further shown in FIG. 6B, the client device 602b renders the AR element 620b at a position indicated by the object vector from the AR data channel 618. Then, as shown in FIG. 6B, the client device 602b detects movement interaction with the AR element 620b from a participant user captured within the captured video 604b. Indeed, in one or more embodiments, the client device 602b renders the AR element 620b moving according to the movement interactions detected with the AR element 620b from the participant user on the captured video 604b. In addition, upon detecting that the AR element 620b is exiting a frame of the captured video 604b, the client device 602b can broadcast the AR element 620b to another client device on the video call (e.g., client device 602c and/or 602a). As shown in FIG. 6A and FIG. 6B, the shared AR video call system 104 enables interaction with (and movement of) AR elements between client devices conducting the video call to create AR-based activities between the client devices during the video call.

In some instances, in reference to FIG. 6B, the client devices 602b and 602c both receive the AR data for the AR element 620a (from FIG. 6A) through the AR data channel 618. As explained above, the shared AR video call system 104 enables client devices to transmit a participant identifier to designate one or more destination client device for one or more AR elements. In the example of FIG. 6B, the client device 602a transmits a participant identifier designating the client device 602b as the recipient client device for the AR identifier and, as a result, the client device 602b renders the AR element 620b within the captured video 604b. Likewise, in reference to FIG. 6B, the client device 602c detects the AR data within the AR data channel and filters the AR data when the AR data does not include a participant identifier designating the client device 602c as the recipient client device. As such, as illustrated in FIG. 6B, the client device 602c takes no action to render new AR elements from the AR data transmitted by the client device 602a via the AR data channel 618.

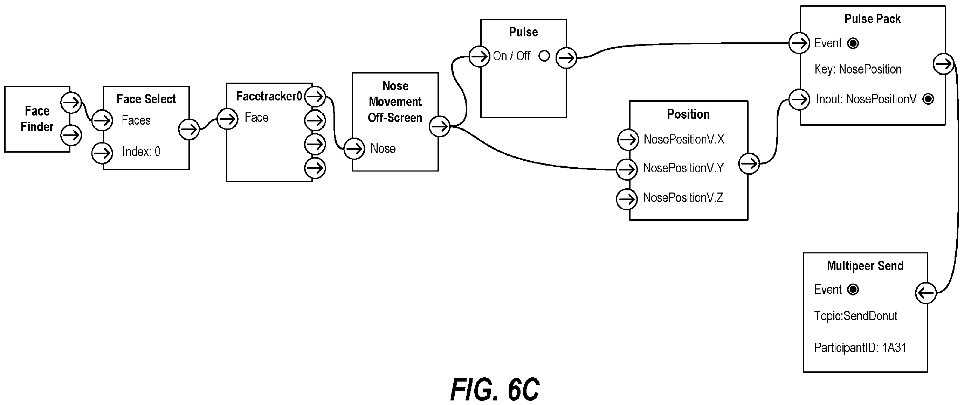

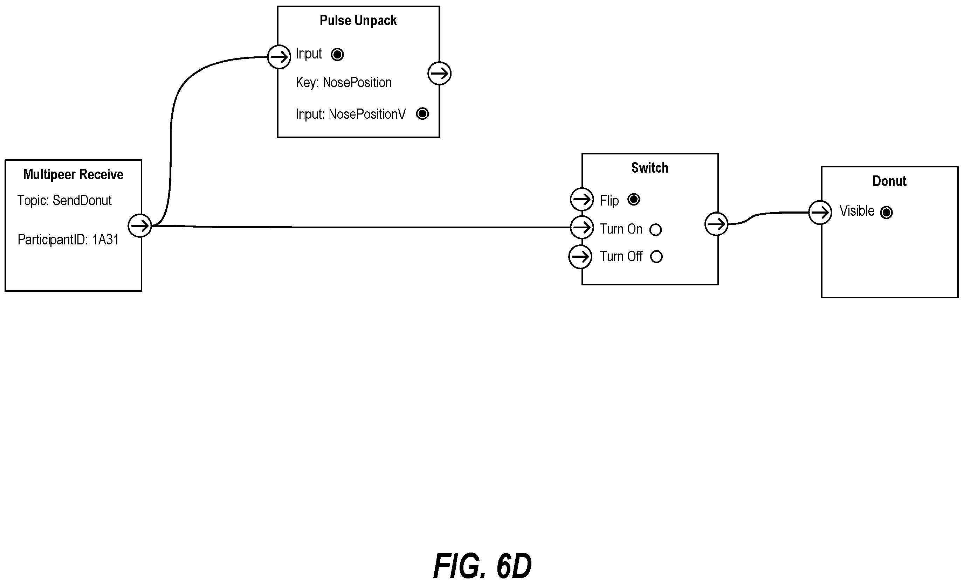

In one or more embodiments and in reference to FIG. 6B, the client devices 602a, 602b, and 602c utilize AR data that includes one or more logic data objects (as described above) to enable the AR element (e.g., the AR-based donut) to move from one client device to another client device during the video call. As an example, FIG. 6C illustrates logic data objects that are utilized and sent as AR data by a client device (e.g., client device 602a) via the AR data channel 618 during the video call to enable the shared AR effect. In addition, FIG. 6D illustrates logic data objects that are received and/or utilized by other client devices (e.g., client devices 602b and 602c) during the video call to receive and render a shared AR effect.

For example, as shown in FIG. 6C (and in reference to FIG. 6B), the client device 602a utilizes logic data objects to track a face in the captured video 604a (e.g., via a Face Finder logic data object, a Face select logic data object, and a Facetracker0 logic data object). Upon detecting that the nose of the participant subj ect to the face tracking logic data objects is moving off screen within the captured video 604a, the client device 602a activates a Nose Movement Off-Screen logic data object that initiates a packaging of AR data (e.g., pulse pack) and also determines a position object vector for the nose (e.g., a nose position vector NosePositionV having x, y, and/or z coordinates). Indeed, as shown in FIG. 6C, the client device 602a packages a logic data object for the position of the nose (e.g., Pulse Pack for "NosePosition"). Then, as shown in FIG. 6C, the client device 602a transmits AR data via a logic data object that includes an AR identifier (e.g., Topic: SendDonut), the packaged positional data, and a participant identifier ("ParticipantID") to the AR data channel 618 (as shown in FIG. 6B).

Subsequently, as shown in FIG. 6D (and in reference to FIG. 6B), the client devices 602b and 602c receive (e.g., Multipeer receive) AR data that includes a logic data object from the AR data channel 618 (as shown in FIG. 6B) that indicates the AR identifier (e.g., Topic: SendDonut) and a participant identifier (e.g., "ParticipantID"). In one or more embodiments, the receiving client devices can utilize the participant identifier to determine whether to unpack the AR data. For example, as described in FIG. 6B, the client device 602b matches to the participant identifier and the client device 602c does not match to the participant identifier. As such, the client device 602b unpacks the AR data illustrated in FIG. 6D to render the AR effect illustrated in FIG. 6B.

For example, upon unpacking the AR data package (e.g., Pulse Unpack), the client device 602b identifies an object position vector (e.g., NosePositionV) for the AR identifier "SendDonut." Utilizing the AR identifier, the client device 602b further utilizes a switch logic data object that causes a rendering of (or toggles visibility of) an AR element ("Donut") that corresponds to the AR identifier "SendDonut" at the position indicated by the logic data object for the object position vector (e.g., NosePositionV) within the captured video 604b. Indeed, as shown in FIG. 6B, the client device 602b utilizes the one or more received logic data objects (described in FIG. 6D) to render an AR-based donut entering the screen of the client device 602b within the captured video 604b.

In one or more embodiments, the shared AR video call system 104 enables the one or more client devices in a video call to utilize object vectors and/or participant identifiers to interact with, move, and/or manipulate AR elements across client devices (as described above) to establish an AR activity. Furthermore, in some cases, the shared AR video call system 104 also enables other AR data to facilitate AR-based activities between client devices on a video call. For example, the shared AR video call system 104 enables other AR data such as, but not limited to score information, AR element size information, and/or other game-based mechanics (e.g., number of lives, number of items, timers, speed). In some embodiments, the client devices transmit such AR data via the AR data channel to have other client devices on the video call to render AR elements to display (or portray) information corresponding to an AR-based activity (e.g., an AR game).

Furthermore, the shared AR video call system 104 can enable a client device to transmit various types of AR data (e.g., AR identifiers for AR elements, object vectors, and/or participant identifiers) to create various interactive and moving AR elements during a video call to facilitate an AR-based activity (e.g., an AR game). For example, one or more client devices can transmit and/or receive AR elements (via an AR data channel) to facilitate interactions with a graphical hockey puck for an AR-based air hockey game during a video call (e.g., where the AR-based hockey puck moves across client devices based on movement interactions detected on the client devices during a video call).

Likewise, in one or more embodiments, one or more client devices can transmit and/or receive AR elements (via an AR data channel) to facilitate interactions with a graphical tennis table ball for an AR-based table tennis game during a video call (e.g., where the AR-based table tennis ball moves across client devices based on movement interactions detected on the client devices during a video call). In some cases, one or more client devices can transmit and/or receive AR elements (via an AR data channel) to facilitate interactions with an AR-based text answer options to problems presented during the video call (e.g., math problems, trivia questions) such that movement interactions detected on the client devices can indicate a user selection of an AR-based text answer options.

Although one or more embodiments herein illustrate the shared AR video call system 104 utilizing the AR data channel to enable an AR-based game between client devices on a video call (as an AR activity), the shared AR video call system 104 can enable various types of AR activities between client devices on a video call. For instance, in one or more embodiments, the shared AR video call system 104 enables the transmission of AR data between client devices of a video call (as described above) to create AR activities such as, but not limited to, a shared AR painting activity, a shared AR sketching activity, a shared AR white board, and/or a shared AR puzzle activity.

For example, one or more client devices during a video call can utilize AR data through an AR data channel to render a shared AR painting environment where user interactions from the client devices on the video call interact with and modify an AR-based canvas with paint and other art instruments to create a shared AR painting on the video call. As another example, one or more client devices during a video call can utilize AR data through an AR data channel to render a shared AR whiteboard where user interactions from the client devices on the video call interact with and modify an AR-based white board to share notes and/or ideas within the shared AR whiteboard on the video call.

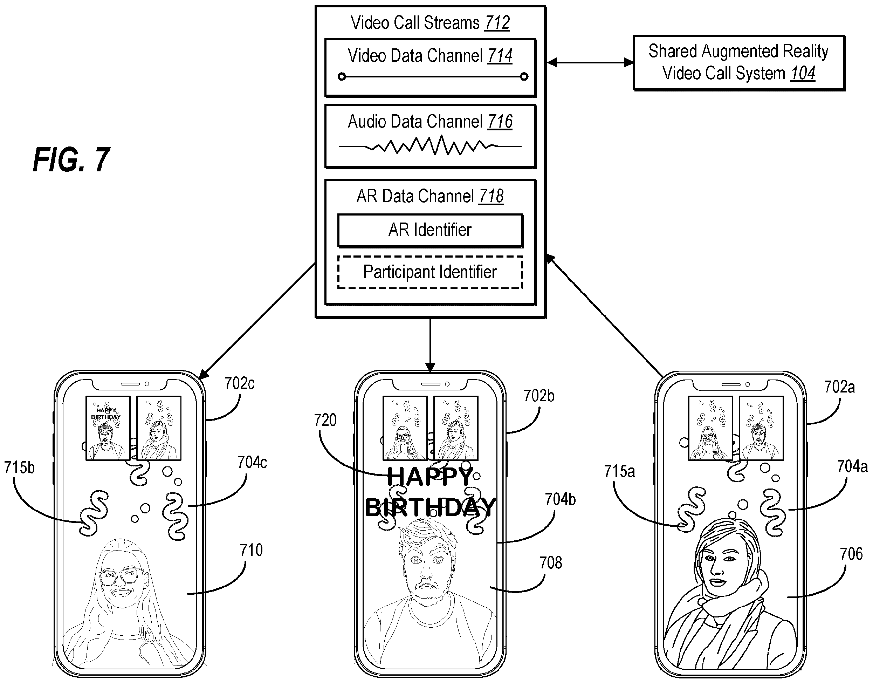

Furthermore, as mentioned above, the shared AR video call system 104 can enable AR effects between client devices on a video call. For example, FIG. 7 illustrates the shared AR video call system 104 enabling shared AR effects between client devices on a video call. In particular, as shown in FIG. 7, a client device can transmit AR data (such as an AR identifier) via an AR data channel to other client devices on a video call to initiate an AR effect on the video call. Indeed, upon receiving the AR data, the one or more client devices render an AR effect during the video call.

For example, as shown in FIG. 7, the shared AR video call system 104 establishes a video call between a client device 702a, a client device 702b, and a client device 702c by establishing video call streams 712 which includes a video data channel 714, an audio data channel 716, and an AR data channel 718. As further shown in FIG. 7, the client device 702a captures and displays a video 704a within a digital video call interface 706, the client device 702b captures and displays a video 704b within a digital video call interface 708, and the client device 702c captures and displays a video 704c within a digital video call interface 710. Moreover, as illustrated in FIG. 7, each of the client devices 702a, 702b, and 702c receives video data through the video data channel 714 (and audio data through the audio data channel 716) from the participant client devices to display the client device video streams (e.g., to establish the video call).

In addition, as shown in FIG. 7, the client device 702a transmits AR data via the AR data channel 718 that includes an AR identifier for an AR effect. Then, as shown in FIG. 7, the client device 702a renders an AR element 715a for the AR effect within the captured video 704a (which is also streamed on the client devices 702b and 702c). Also, in reference to FIG. 7, the client devices 702b and 702c also receive the AR identifier for the AR effect through the AR data channel 718. In response, as shown in FIG. 7, the client device 702b renders an AR element 720 for the AR effect within the captured video 704b (which is also streamed on the client devices 702a and 702c). Furthermore, as shown in FIG. 7, the client device 702c renders an AR element 715b for the AR effect within the captured video 704c (which is streamed on the client devices 702a and 702b).

As shown in FIG. 7, the client devices 702a, 702b, and 702c render AR elements for the transmitted AR effect to render an AR-based birthday scene within the captured videos of the video call. In some cases (as shown in FIG. 7), the AR effect can include different rendered AR elements per client device (e.g., while using the same AR effect theme). For example, as shown in FIG. 7, an AR effect can lead to a client device 702b rendering an AR element 720 that depicts a birthday message on the captured video 704b while having the other client devices (e.g., client devices 702a and 702c) render a related AR element in their respective captured video for the AR-based birthday message (e.g., AR-based celebratory confetti).

In some embodiments, a client device transmits AR data that includes an AR effect. For example, an AR effect can include a collection of AR-based instructions, animations, and/or elements. Upon receiving an AR effect and/or an AR identifier that references an AR effect, a client device can render AR elements from the AR effect utilizing the AR-based instructions and/or animations for the AR elements. For instance, an AR-based instruction and/or animation can include an instruction to position an AR element at a specific location (e.g., at the top of a video, on the face of a participant user within the video, as a wearable item on the participant user within the video). In addition, the AR-based instruction and/or animation can also include instructions for specific movements of an AR element (e.g., a speed, a specific action such as crawling, toppling, and/or splashing). Indeed, the shared AR video call system 104 enables client devices to transmit AR effects having various combinations of AR elements, AR instructions, and/or AR animations. Furthermore, in one or more embodiments, the AR elements of an AR effect can also be interactable and/or manipulatable as described above (e.g., in relation to FIGS. 3-6D).

In some instances, a client device also includes a participant identifier with AR data transmitted for an AR effect during a video call. For example, as described above, a client device can transmit a participant identifier to designate one or more destination client devices for an AR effect. In addition, in some embodiments, the client device can transmit a participant identifier to designate (or distinguish) AR effects between client devices on a video call. For example, in some cases, the client device transmits a participant identifier to designate a subject client device for an AR effect. Then, the client device that is designated as the subject client device renders an AR effect that is different from an AR effect rendered on other client devices during a video call.

For example, a subject client device can render a main (or primary) AR effect while the other client devices render a secondary AR effect upon receiving the participant identifier and AR data for the AR effect through the AR data channel. Indeed, in some embodiments, the primary AR effect can be different from the secondary AR effect. As an example, as shown in FIG. 7, during a birthday themed AR effect, the subject client device 702b can render a main AR effect (through AR element 720) that displays a birthday message while the other client devices 702a and 702c can render a secondary AR effect through AR elements 715a and 715b that displays AR-based confetti.

In some instances, the client devices receive AR data and render the same AR effects across the video call. In some embodiments, the client devices receive AR data and render AR effects for a uniform theme but with slight variations in animation (e.g., a birthday theme where AR confetti is of different colors and sizes per client device during the video call). Furthermore, in some cases, the client devices render AR effects during a video call that are temporary (e.g., the AR effect renders and displays for a threshold amount of time before disappearing from a captured video).

In one or more embodiments, a client device transmits AR data for an AR effect that is targeted to a specific client device on a video call. Indeed, the shared AR video call system 104 can enable a client device to transmit and cause another client device to render an AR effect individually during a video call (e.g., only a singular or a select number of client devices render an AR effect). For example, in some cases, the client device transmits AR data for the AR effect with a participant identifier (as described above) to cause one or more specific other client devices to render the AR effect during the video call.

Additionally, although one or more embodiments herein illustrate the shared AR video call system 104 enabling a birthday themed AR effect during a video call, in one or more embodiments, the shared AR video call system 104 enables various types of AR effects between client devices on a video call utilizing an AR data channel. As an example, a client device can transmit AR data via an AR data channel (established by the shared AR video call system 104) to cause other client devices on the video call to render an AR effect that portrays a snowfall within a captured video. Indeed, the shared AR video call system 104 can enable various AR effects such as, but not limited to, rainfall, confetti, fireworks, congratulatory roses, anniversary themed AR effects, wedding themed AR effects, graduation themed AR effects, and/or holiday themed AR effects.

Moreover, in one or more embodiments, the shared AR video call system 104 can also enable AR effects that modify the appearances of one or more participant users that are captured within videos of one or more client devices on a video call. For example, the shared AR video call system 104 can enable various AR effects such as, but not limited to, hats, glasses, beards, clothing, costumes, hairstyles, animated masks (e.g., face paintings, masks, cartoon ears, cartoon eyes), and/or video capture style changes (e.g., cartoon effects on the video, comic book effects on the video, filters on the video). Indeed, in one or more embodiments, a client device receives such AR effects and utilizes video capture functionalities on the client device (e.g., face tracking, graphic processors, motion tracking, light tracking) to render and apply AR effects within a captured video and/or on a participant user captured within the captured video.

In some embodiments, the shared AR video call system 104 further provides, for display within a digital video call interface of a client device, one or more selectable AR options for AR environments, AR effects, AR-based activities, and/or individual AR elements. In particular, upon receiving a selection of the one or more selectable AR options from the digital video call interface on the client device, the client device can transmit AR data to share and render the selected AR options on the one or more client devices participating in a video call. In some cases, the shared AR video call system 104 can, in response to receiving the selection of the one or more selectable AR options from the client device, provide one or more AR elements (and/or other AR data) to the one or more client devices on the video call to initialize the AR environments, AR effects, AR-based activities, and/or individual AR elements on the one or more client devices.

Furthermore, in some cases, one or more of the participating client devices can transmit an additional (or alternative) AR environment, AR effect, AR-based activity, and/or individual AR element (e.g., via a selection of the alternative AR environment, AR effect, AR-based activity, and/or individual AR element). Indeed, in one or more embodiments, the shared AR video call system 104 enables the client devices on the video call to change or render a new AR environment, AR effect, AR-based activity, and/or individual AR element upon identifying AR data within an AR data channel that indicates the selection (or newly shared AR data). In particular, the shared AR video call system 104 can enable the client devices to switch between various AR environments, AR effects, AR-based activities, and/or individual AR elements during a video call by utilizing the AR data channel.

In some cases, the shared AR video call system 104 can further provide for display within a digital video call interface of a client device, one or more selectable options to select one or more subject participant devices for a shared AR environment, AR effect, AR-based activity, and/or individual AR element during a video call. For instance, during the selection of shared AR environment, AR effect, AR-based activity, and/or individual AR element, a client device can also receive a selection of one or more subject users (or subject client devices). Then, the client device can transmit AR data through the AR data channel to share the AR environment, AR effect, AR-based activity, and/or individual AR element with one or more participant identifiers for the selected one or more subject users. Indeed, one or more receiving client devices on the video call can (as described above) utilize the participant identifiers to determine whether or not to render the AR environment, AR effect, AR-based activity, and/or individual AR element and/or determine whether to render a primary versus a secondary AR effect.

Furthermore, in one or more embodiments, the shared AR video call system 104 can enable audio components to a shared AR environment, AR effect, AR-based activity, and/or individual AR element during a video call. For example, a client device can also transmit audio information (or audio identifiers) through an AR data channel such that the client devices on a video call play audio for the AR environment, AR effect, AR-based activity, and/or individual AR element (e.g., audio related to the AR elements). In some cases, the shared AR video call system 104 can provide a library of audio data for one or more AR environments, AR effects, AR-based activities, and/or individual AR elements available during a video call between a plurality of client devices.

Additionally, in one or more embodiments, the shared AR video call system 104 generates graphical user interfaces to provide debugging tools for a shared AR video call. In particular, in some embodiments, the shared AR video call system 104 provides a selectable option to preview a shared AR effect during a video call utilizing one or more simulated video call participants. Indeed, the shared AR video call system 104 can provide selectable options to select one or more simulated video call participants (e.g., pre-recorded or AI-based video call participants that are portrayed as video call participants) for a preview video call. Additionally, the shared AR video call system 104 can provide selectable options to select a particular AR effect. Upon receiving a selection of an AR effect, the shared AR video call system 104 can provide, for display, a simulated preview of the AR effect across the one or more simulated video call participants. In some cases, the shared AR video call system 104 can also provide one or more selectable options to display AR data messages, send AR data messages, display an AR data transmission history during a simulated video call with AR effect previews.

In one or more embodiments, the shared AR video call system 104 is implemented on a computing device with various components and capabilities. One or more components of the shared AR video call system 104 can include software, hardware, or both. For instance, one or more components of the shared AR video call system 104 can include one or more instructions stored on a computer-readable storage medium and can be executable by processors of one or more computing devices, such as a client device or server device. When executed by the one or more processors, the computer-executable instructions of the shared AR video call system 104 can cause the computing device(s) to perform the methods described herein. Alternatively, the one or more components of the shared AR video call system 104 can include hardware, such as a special-purpose processing device to perform a certain function or group of functions. Alternatively, the one or more components of the shared AR video call system 104 can include a combination of computer-executable instructions and hardware.

Furthermore, the one or more components of the shared AR video call system 104 may, for example, be implemented as one or more operating systems, as one or more stand-alone applications, as one or more modules of an application, as one or more plug-ins, as one or more library functions or functions that may be called by other applications, and/or as a cloud-computing model. Thus, the one or more components of the shared AR video call system 104 may be implemented as a stand-alone application, such as a desktop or mobile application. Furthermore, the one or more components of the shared AR video call system 104 may be implemented as one or more web-based applications hosted on a remote server. Alternatively, or additionally, the one or more components of the shared AR video call system 104 may be implemented in a suite of mobile device applications or "apps."

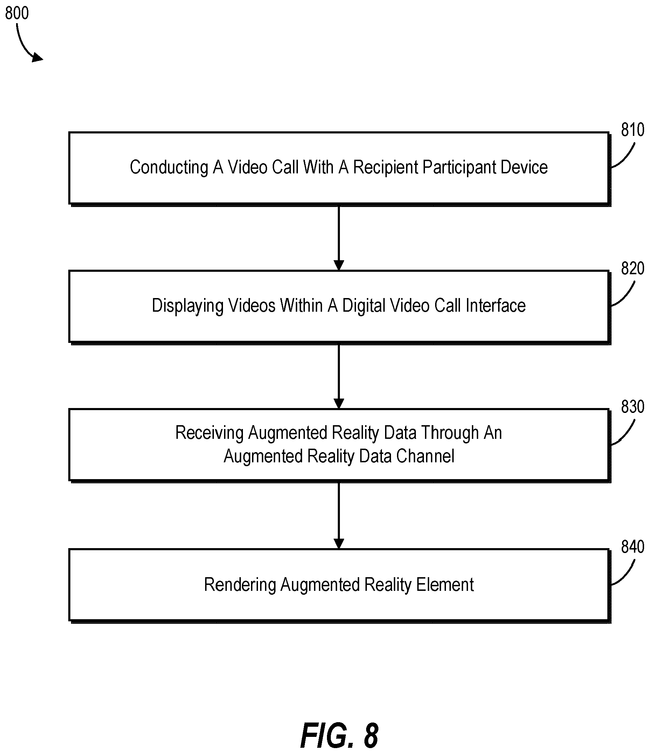

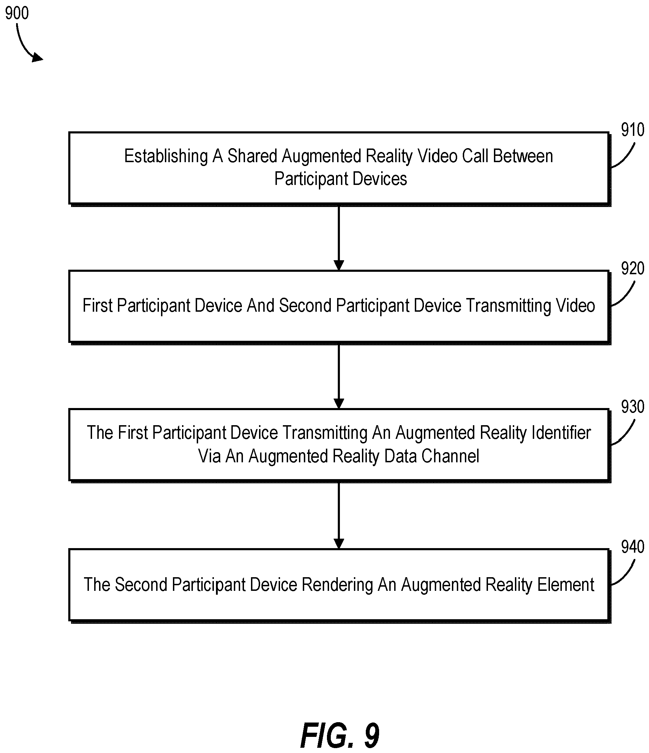

FIGS. 1-7, the corresponding text and the examples provide a number of different methods, systems, devices, and non-transitory computer-readable media of the shared AR video call system 104. In addition to the foregoing, one or more embodiments can also be described in terms of flowcharts comprising acts for accomplishing particular results, as shown in FIGS. 8 and 9. FIGS. 8 and 9 may be performed with more or fewer acts. Furthermore, the acts shown in FIGS. 8 and 9 may be performed in different orders. Additionally, the acts described in FIG. 8 and the acts described in FIG. 9 may be repeated or performed in parallel with one another or in parallel with different instances of the same or similar acts.

For example, FIG. 8 illustrates a flowchart of a series of acts 800 for rendering AR elements within a video call in accordance with one or more implementations. While FIG. 8 illustrates acts according to one or more embodiments, alternative embodiments may omit, add to, reorder, and/or modify any of the acts shown in FIG. 8. In some implementations, the acts of FIG. 8 are performed as part of a method. Alternatively, a non-transitory computer-readable medium can store instructions thereon that, when executed by at least one processor, cause a computing device to perform the acts of FIG. 8. In some embodiments, a system performs the acts of FIG. 8. For example, in one or more embodiments, a system includes at least one processor. The system can further include a non-transitory computer-readable medium comprising instructions that, when executed by the at least one processor, cause the system to perform the acts of FIG. 8.

As shown in FIG. 8, the series of acts 800 includes an act 810 of conducting a video call with a recipient participant device. In particular, the act 810 can include conducting, by a client device, a video call with a recipient participant device by receiving video data through a video data channel established for the video call from the recipient participant device.

Furthermore, the series of acts 800 includes an act 820 of displaying videos within a digital video call interface. In particular, the act 820 can include displaying, within a digital video call interface, a first video captured by a client device. In addition, the act 820 can include displaying, within a digital video call interface, a second video from a recipient participant device by rendering video data received through a video data channel. In addition, the act 820 can include displaying, within a digital video call interface, a second video from a recipient participant device portraying an additional augmented reality effect interacting with a recipient user depicted within the second video. Additionally, the act 820 can include detecting a user movement interaction within a first video captured by a client device and modifying an augmented reality element within the first video based on the user movement interaction.

The series of acts 800 includes an act 830 of receiving augmented reality data through an augmented reality data channel. In particular, the act 830 can include receiving augmented reality data indicating an augmented reality element from a recipient participant device through an augmented reality data channel established for a video call with the recipient participant device. In addition, the act 830 can include receiving additional augmented reality data indicating a modification to an augmented reality element from a recipient participant device through an augmented reality data channel.

Moreover, the act 830 can include identifying a participant identifier from an additional augmented reality data. Additionally, the act 830 can include identifying an object vector from an additional augmented reality data. Furthermore, the act 830 can include identifying a selection indicating a client device as a subject participant within an augmented reality data. Furthermore, the act 830 can include receiving augmented reality data indicating an augmented reality element by filtering a set of augmented reality data in an augmented reality data channel.

Moreover, the series of acts 800 includes an act 840 of rendering an augmented reality element. In particular, the act 840 can include rendering an augmented reality element within a first video displayed within a digital video call interface based on received augmented reality data. Furthermore, the act 840 can include rendering an augmented reality element within a first video displayed within a digital video call interface to share an augmented reality environment scene depicted within a second video from a recipient participant device. For example, an augmented reality element can modify at least one of a background, foreground, or video filter of a first video. Furthermore, the act 840 can include rendering an augmented reality element within a first video to display an augmented reality effect interacting with a user depicted within the first video. In addition, the act 840 can include rendering an augmented reality effect within a first video on a client device to be different from an additional augmented reality effect displayed in a second video based on a selection indicating the client device as a subject participant.

Additionally, the act 840 can include modifying an augmented reality element within a first video based on additional augmented reality data. In some cases, the act 840 includes displaying, within a digital video call interface, a second video from a recipient participant device to depict an additional augmented reality element exiting a frame of the second video by rendering video data received through a video data channel and rendering the additional augmented reality element within a first video based on received additional augmented reality data to depict the additional augmented reality element entering a frame of the first video. Furthermore, the act 840 can include determining to render an additional augmented reality element within a first video by matching a participant identifier to a client device. Additionally, the act 840 can include rendering an additional augmented reality element within a first video at a particular location and moving in a particular direction utilizing an object vector.

Turning now to FIG. 9, FIG. 9 illustrates a flowchart of a series of acts 900 for establishing a shared augmented reality video call in accordance with one or more implementations. While FIG. 9 illustrates acts according to one or more embodiments, alternative embodiments may omit, add to, reorder, and/or modify any of the acts shown in FIG. 9. In some implementations, the acts of FIG. 9 are performed as part of a method. Alternatively, a non-transitory computer-readable medium can store instructions thereon that, when executed by at least one processor, cause a computing device to perform the acts of FIG. 9. In some embodiments, a system performs the acts of FIG. 9. For example, in one or more embodiments, a system includes at least one processor. The system can further include a non-transitory computer-readable medium comprising instructions that, when executed by the at least one processor, cause the system to perform the acts of FIG. 9.

As shown in FIG. 9, the series of acts 900 includes an act 910 of establishing a shared augmented reality video call between participant devices. In particular, the act 910 can include establishing a shared augmented reality video call between a first participant device and a second participant device by establishing a video data channel and an augmented reality data channel between the first participant device and the second participant device.

The series of acts 900 also includes an act 920 of a first participant device and a second participant device transmitting video. In particular, the act 920 can include a participant device capturing a first video stream and transmitting the first video stream to a second participant device via a video data channel. Furthermore, the act 920 can include a second participant device capturing a second video stream and transmitting the second video stream to a first participant device via a video data channel. The act 920 can further include a first participant device transmitting a first video stream to a second participant device via a video data channel to depict an augmented reality element within the first video stream.

Furthermore, the series of acts 900 includes an act 930 of the first participating device transmitting an augmented reality identifier via an augmented reality data channel. In particular, the act 930 can include a first participant device sending an augmented reality identifier to a second participant device via an augmented reality data channel. Moreover, the act 930 can include a first participant device sending an additional augmented reality identifier to indicate an interaction with an augmented reality element. Additionally, the act 930 can include a first participant device sending an augmented reality identifier to a second participant device via an augmented reality data channel to indicate an object vector for an augmented reality element. In addition, the act 930 can include a first participant device sending an augmented reality identifier to a plurality of participant devices via an augmented reality data channel.

The series of acts 900 also includes an act 940 of the second participant device rendering an augmented reality element. In particular, the act 940 can include a second participant device rendering a second video stream with an augmented reality element associated with an augmented reality identifier. Furthermore, the act 940 can include a first participant device rendering a first video stream with an additional augmented reality element associated with an augmented reality identifier to share an augmented reality environment scene depicted within a second video stream from a second participant device. Moreover, the act 940 can include a second participant device rendering a second video stream with a modification to an augmented reality element based on an additional augmented reality identifier.

Additionally, the act 940 can include, upon sending an augmented reality identifier to a second participant device via an augmented reality data channel, a first participant device transmitting a first video stream to a second participant device via a video data channel to depict an augmented reality element exiting a frame of the first video stream. Furthermore, the act 940 can include, upon sending an augmented reality identifier to a second participant device via an augmented reality data channel, a second participant device rendering a second video stream with an augmented reality element associated with an augmented reality identifier entering a frame of the second video stream. Moreover, the act 940 can include a second participant device rendering a second video stream with an augmented reality element associated with an augmented reality identifier at a particular location and moving in a particular direction utilizing an object vector.

Moreover, the act 940 can include a second participant device rendering a second video stream with an augmented reality element to display an augmented reality effect interacting with a user depicted within the second video stream. Additionally, the act 940 can include a first participant device rendering a first video stream with an additional augmented reality effect interacting with a user depicted within the first video stream. Moreover, the act 940 can include a plurality of participant devices rendering video streams with an augmented reality element associated with an augmented reality identifier.

Embodiments of the present disclosure may comprise or utilize a special purpose or general-purpose computer including computer hardware, such as, for example, one or more processors and system memory, as discussed in greater detail below. Embodiments within the scope of the present disclosure also include physical and other computer-readable media for carrying or storing computer-executable instructions and/or data structures. In particular, one or more of the processes described herein may be implemented at least in part as instructions embodied in a non-transitory computer-readable medium and executable by one or more computing devices (e.g., any of the media content access devices described herein). In general, a processor (e.g., a microprocessor) receives instructions, from a non-transitory computer-readable medium, (e.g., memory), and executes those instructions, thereby performing one or more processes, including one or more of the processes described herein.

Computer-readable media can be any available media that can be accessed by a general purpose or special purpose computer system. Computer-readable media that store computer-executable instructions are non-transitory computer-readable storage media (devices). Computer-readable media that carry computer-executable instructions are transmission media. Thus, by way of example, and not limitation, embodiments of the disclosure can comprise at least two distinctly different kinds of computer-readable media: non-transitory computer-readable storage media (devices) and transmission media.

Non-transitory computer-readable storage media (devices) includes RAM, ROM, EEPROM, CD-ROM, solid state drives ("SSDs") (e.g., based on RAM), Flash memory, phase-change memory ("PCM"), other types of memory, other optical disk storage, magnetic disk storage or other magnetic storage devices, or any other medium which can be used to store desired program code means in the form of computer-executable instructions or data structures and which can be accessed by a general purpose or special purpose computer.

A "network" is defined as one or more data links that enable the transport of electronic data between computer systems and/or modules and/or other electronic devices. When information is transferred or provided over a network or another communications connection (either hardwired, wireless, or a combination of hardwired or wireless) to a computer, the computer properly views the connection as a transmission medium. Transmissions media can include a network and/or data links which can be used to carry desired program code means in the form of computer-executable instructions or data structures and which can be accessed by a general purpose or special purpose computer. Combinations of the above should also be included within the scope of computer-readable media.

Further, upon reaching various computer system components, program code means in the form of computer-executable instructions or data structures can be transferred automatically from transmission media to non-transitory computer-readable storage media (devices) (or vice versa). For example, computer-executable instructions or data structures received over a network or data link can be buffered in RAM within a network interface module (e.g., a "NIC"), and then eventually transferred to computer system RAM and/or to less volatile computer storage media (devices) at a computer system. Thus, it should be understood that non-transitory computer-readable storage media (devices) can be included in computer system components that also (or even primarily) utilize transmission media.

Computer-executable instructions comprise, for example, instructions and data which, when executed by a processor, cause a general-purpose computer, special purpose computer, or special purpose processing device to perform a certain function or group of functions. In some embodiments, computer-executable instructions are executed by a general-purpose computer to turn the general-purpose computer into a special purpose computer implementing elements of the disclosure. The computer-executable instructions may be, for example, binaries, intermediate format instructions such as assembly language, or even source code. Although the subject matter has been described in language specific to structural features and/or methodological acts, it is to be understood that the subject matter defined in the appended claims is not necessarily limited to the described features or acts described above. Rather, the described features and acts are disclosed as example forms of implementing the claims.

Those skilled in the art will appreciate that the disclosure may be practiced in network computing environments with many types of computer system configurations, including, personal computers, desktop computers, laptop computers, message processors, hand-held devices, multi-processor systems, microprocessor-based or programmable consumer electronics, network PCs, minicomputers, mainframe computers, mobile telephones, PDAs, tablets, pagers, routers, switches, and the like. The disclosure may also be practiced in distributed system environments where local and remote computer systems, which are linked (either by hardwired data links, wireless data links, or by a combination of hardwired and wireless data links) through a network, both perform tasks. In a distributed system environment, program modules may be located in both local and remote memory storage devices.

Embodiments of the present disclosure can also be implemented in cloud computing environments. As used herein, the term "cloud computing" refers to a model for enabling on-demand network access to a shared pool of configurable computing resources. For example, cloud computing can be employed in the marketplace to offer ubiquitous and convenient on-demand access to the shared pool of configurable computing resources. The shared pool of configurable computing resources can be rapidly provisioned via virtualization and released with low management effort or service provider interaction, and then scaled accordingly.

A cloud-computing model can be composed of various characteristics such as, for example, on-demand self-service, broad network access, resource pooling, rapid elasticity, measured service, and so forth. A cloud-computing model can also expose various service models, such as, for example, Software as a Service ("SaaS"), Platform as a Service ("PaaS"), and Infrastructure as a Service ("IaaS"). A cloud-computing model can also be deployed using different deployment models such as private cloud, community cloud, public cloud, hybrid cloud, and so forth. In addition, as used herein, the term "cloud-computing environment" refers to an environment in which cloud computing is employed.

FIG. 10 illustrates a block diagram of an example computing device 1000 that may be configured to perform one or more of the processes described above. One will appreciate that one or more computing devices, such as the computing device 1000 may represent the computing devices described above (e.g., server device(s) 102 and/or a client devices 108a, 108b-108n). In one or more embodiments, the computing device 1000 may be a mobile device (e.g., a mobile telephone, a smartphone, a PDA, a tablet, a laptop, a camera, a tracker, a watch, a wearable device, a head mounted display, etc.). In some embodiments, the computing device 1000 may be a non-mobile device (e.g., a desktop computer or another type of client device). Further, the computing device 1000 may be a server device that includes cloud-based processing and storage capabilities.

As shown in FIG. 10, the computing device 1000 can include one or more processor(s) 1002, memory 1004, a storage device 1006, input/output interfaces 1008 (or "I/O interfaces 1008"), and a communication interface 1010, which may be communicatively coupled by way of a communication infrastructure (e.g., bus 1012). While the computing device 1000 is shown in FIG. 10, the components illustrated in FIG. 10 are not intended to be limiting. Additional or alternative components may be used in other embodiments. Furthermore, in certain embodiments, the computing device 1000 includes fewer components than those shown in FIG. 10. Components of the computing device 1000 shown in FIG. 10 will now be described in additional detail.

In particular embodiments, the processor(s) 1002 includes hardware for executing instructions, such as those making up a computer program. As an example, and not by way of limitation, to execute instructions, the processor(s) 1002 may retrieve (or fetch) the instructions from an internal register, an internal cache, memory 1004, or a storage device 1006 and decode and execute them.

The computing device 1000 includes memory 1004, which is coupled to the processor(s) 1002. The memory 1004 may be used for storing data, metadata, and programs for execution by the processor(s). The memory 1004 may include one or more of volatile and non-volatile memories, such as Random-Access Memory ("RAM"), Read-Only Memory ("ROM"), a solid-state disk ("SSD"), Flash, Phase Change Memory ("PCM"), or other types of data storage. The memory 1004 may be internal or distributed memory.

The computing device 1000 includes a storage device 1006 includes storage for storing data or instructions. As an example, and not by way of limitation, the storage device 1006 can include a non-transitory storage medium described above. The storage device 1006 may include a hard disk drive (HDD), flash memory, a Universal Serial Bus (USB) drive or a combination these or other storage devices.

As shown, the computing device 1000 includes one or more I/O interfaces 1008, which are provided to allow a user to provide input to (such as user strokes), receive output from, and otherwise transfer data to and from the computing device 1000. These I/O interfaces 1008 may include a mouse, keypad or a keyboard, a touch screen, camera, optical scanner, network interface, modem, other known I/O devices or a combination of such I/O interfaces 1008. The touch screen may be activated with a stylus or a finger.

The I/O interfaces 1008 may include one or more devices for presenting output to a user, including, but not limited to, a graphics engine, a display (e.g., a display screen), one or more output drivers (e.g., display drivers), one or more audio speakers, and one or more audio drivers. In certain embodiments, I/O interfaces 1008 are configured to provide graphical data to a display for presentation to a user. The graphical data may be representative of one or more graphical user interfaces and/or any other graphical content as may serve a particular implementation.

The computing device 1000 can further include a communication interface 1010. The communication interface 1010 can include hardware, software, or both. The communication interface 1010 provides one or more interfaces for communication (such as, for example, packet-based communication) between the computing device and one or more other computing devices or one or more networks. As an example, and not by way of limitation, communication interface 1010 may include a network interface controller (NIC) or network adapter for communicating with an Ethernet or other wire-based network or a wireless NIC (WNIC) or wireless adapter for communicating with a wireless network, such as a WI-FI. The computing device 1000 can further include a bus 1012. The bus 1012 can include hardware, software, or both that connects components of computing device 1000 to each other. As an example, the bus 1012 may include one or more types of buses.

Embodiments of the invention may include or be implemented in conjunction with an artificial reality system. Artificial reality is a form of reality that has been adjusted in some manner before presentation to a user, which may include, e.g., a virtual reality (VR), an augmented reality (AR), a mixed reality (MR), a hybrid reality, or some combination and/or derivatives thereof. Artificial reality content may include completely generated content or generated content combined with captured content (e.g., real-world photographs). The artificial reality content may include video, audio, haptic feedback, or some combination thereof, and any of which may be presented in a single channel or in multiple channels (such as stereo video that produces a three-dimensional effect to the viewer). Additionally, in some embodiments, artificial reality may be associated with applications, products, accessories, services, or some combination thereof, that are, e.g., used to create content in an artificial reality and/or used in (e.g., perform activities in) an artificial reality. The artificial reality system that provides the artificial reality content may be implemented on various platforms, including a head-mounted display (HMD) connected to a host computer system, a standalone HMD, a mobile device or computing system, or any other hardware platform capable of providing artificial reality content to one or more viewers.

As mentioned above, the communications system can be included in a social networking system. A social networking system may enable its users (such as persons or organizations) to interact with the system and with each other. The social networking system may, with input from a user, create and store in the social networking system a user profile associated with the user. As described above, the user profile may include demographic information, communication channel information, and information on personal interests of the user.

In more detail, user profile information may include, for example, biographic information, demographic information, behavioral information, the social information, or other types of descriptive information, such as work experience, educational history, hobbies or preferences, interests, affinities, or location. Interest information may include interests related to one or more categories, which may be general or specific. As an example, if a user "likes" an article about a brand of shoes, the category may be the brand.

The social networking system may also, with input from a user, create and store a record of relationships of the user with other users of the social networking system, as well as provide services (e.g., wall posts, photo-sharing, online calendars and event organization, messaging, games, or advertisements) to facilitate social interaction between or among users. Also, the social networking system may allow users to post photographs and other multimedia content items to a user's profile page (typically known as "wall posts" or "timeline posts") or in a photo album, both of which may be accessible to other users of the social networking system depending on the user's configured privacy settings. Herein, the term "friend" may refer to any other user of the social networking system with which a user has formed a connection, association, or relationship via the social networking system.

FIG. 11 illustrates an example network environment 1100 of a social networking system. Network environment 1100 includes a client device 1106, a networking system 1102 (e.g., a social networking system and/or an electronic messaging system), and a third-party system 1108 connected to each other by a network 1104. Although FIG. 11 illustrates a particular arrangement of client device 1106, networking system 1102, third-party system 1108, and network 1104, this disclosure contemplates any suitable arrangement of client device 1106, networking system 1102, third-party system 1108, and network 1104. As an example and not by way of limitation, two or more of client device 1106, networking system 1102, and third-party system 1108 may be connected to each other directly, bypassing network 1104. As another example, two or more of client device 1106, networking system 1102, and third-party system 1108 may be physically or logically co-located with each other in whole or in part. Moreover, although FIG. 11 illustrates a particular number of client devices 1106, networking systems 1102, third-party systems 1108, and networks 1104, this disclosure contemplates any suitable number of client devices 1106, networking systems 1102, third-party systems 1108, and networks 1104. As an example and not by way of limitation, network environment 1100 may include multiple client device 1106, networking systems 1102, third-party systems 1108, and networks 1104.

This disclosure contemplates any suitable network 1104. As an example and not by way of limitation, one or more portions of network 1104 may include an ad hoc network, an intranet, an extranet, a virtual private network (VPN), a local area network (LAN), a wireless LAN (WLAN), a wide area network (WAN), a wireless WAN (WWAN), a metropolitan area network (MAN), a portion of the Internet, a portion of the Public Switched Telephone Network (PSTN), a cellular telephone network, or a combination of two or more of these. Network 1104 may include one or more networks 1104.

Links may connect client device 1106, networking system 1102, and third-party system 1108 to communication network 1104 or to each other. This disclosure contemplates any suitable links. In particular embodiments, one or more links include one or more wireline (such as for example Digital Subscriber Line (DSL) or Data Over Cable Service Interface Specification (DOCSIS)), wireless (such as for example Wi-Fi or Worldwide Interoperability for Microwave Access (WiMAX)), or optical (such as for example Synchronous Optical Network (SONET) or Synchronous Digital Hierarchy (SDH)) links. In particular embodiments, one or more links each include an ad hoc network, an intranet, an extranet, a VPN, a LAN, a WLAN, a WAN, a WWAN, a MAN, a portion of the Internet, a portion of the PSTN, a cellular technology-based network, a satellite communications technology-based network, another link, or a combination of two or more such links. Links need not necessarily be the same throughout network environment 1100. One or more first links may differ in one or more respects from one or more second links.

In particular embodiments, client device 1106 may be an electronic device including hardware, software, or embedded logic components or a combination of two or more such components and capable of carrying out the appropriate functionalities implemented or supported by client device 1106. As an example and not by way of limitation, a client device 1106 may include a computer system such as an augmented reality display device, a desktop computer, notebook or laptop computer, netbook, a tablet computer, e-book reader, GPS device, camera, personal digital assistant (PDA), handheld electronic device, cellular telephone, smartphone, other suitable electronic device, or any suitable combination thereof. This disclosure contemplates any suitable client devices 1106. A client device 1106 may enable a network user at client device 1106 to access network 1104. A client device 1106 may enable its user to communicate with other users at other client devices 1106.

In particular embodiments, client device 1106 may include a web browser, and may have one or more add-ons, plug-ins, or other extensions. A user at client device 1106 may enter a Uniform Resource Locator (URL) or other address directing the web browser to a particular server (such as server, or a server associated with a third-party system 1108), and the web browser may generate a Hyper Text Transfer Protocol (HTTP) request and communicate the HTTP request to server. The server may accept the HTTP request and communicate to client device 1106 one or more Hyper Text Markup Language (HTML) files responsive to the HTTP request. Client device 1106 may render a webpage based on the HTML files from the server for presentation to the user. This disclosure contemplates any suitable webpage files. As an example and not by way of limitation, webpages may render from HTML files, Extensible Hyper Text Markup Language (XHTML) files, or Extensible Markup Language (XML) files, according to particular needs. Such pages may also execute scripts such as, for example and without limitation, those written in JAVASCRIPT, JAVA, MICROSOFT SILVERLIGHT, combinations of markup language and scripts such as AJAX (Asynchronous JAVASCRIPT and XML), and the like. Herein, reference to a webpage encompasses one or more corresponding webpage files (which a browser may use to render the webpage) and vice versa, where appropriate.

In particular embodiments, networking system 1102 may be a network-addressable computing system that can host an online social network. Networking system 1102 may generate, store, receive, and send social-networking data, such as, for example, user-profile data, concept-profile data, social-graph information, or other suitable data related to the online social network. Networking system 1102 may be accessed by the other components of network environment 1100 either directly or via network 1104. In particular embodiments, networking system 1102 may include one or more servers. Each server may be a unitary server or a distributed server spanning multiple computers or multiple datacenters. Servers may be of various types, such as, for example and without limitation, web server, news server, mail server, message server, advertising server, file server, application server, exchange server, database server, proxy server, another server suitable for performing functions or processes described herein, or any combination thereof. In particular embodiments, each server may include hardware, software, or embedded logic components or a combination of two or more such components for carrying out the appropriate functionalities implemented or supported by server. In particular embodiments, networking system 1102 may include one or more data stores. Data stores may be used to store various types of information. In particular embodiments, the information stored in data stores may be organized according to specific data structures. In particular embodiments, each data store may be a relational, columnar, correlation, or other suitable database. Although this disclosure describes or illustrates particular types of databases, this disclosure contemplates any suitable types of databases. Particular embodiments may provide interfaces that enable a client device 1106, a networking system 1102, or a third-party system 1108 to manage, retrieve, modify, add, or delete, the information stored in data store.

In particular embodiments, networking system 1102 may store one or more social graphs in one or more data stores. In particular embodiments, a social graph may include multiple nodes-which may include multiple user nodes (each corresponding to a particular user) or multiple concept nodes (each corresponding to a particular concept)-and multiple edges connecting the nodes. Networking system 1102 may provide users of the online social network the ability to communicate and interact with other users. In particular embodiments, users may join the online social network via networking system 1102 and then add connections (e.g., relationships) to a number of other users of networking system 1102 that they want to be connected to. Herein, the term "friend" may refer to any other user of networking system 1102 with whom a user has formed a connection, association, or relationship via networking system 1102.

In particular embodiments, networking system 1102 may provide users with the ability to take actions on various types of items or objects, supported by networking system 1102. As an example and not by way of limitation, the items and objects may include groups or social networks to which users of networking system 1102 may belong, events or calendar entries in which a user might be interested, computer-based applications that a user may use, transactions that allow users to buy or sell items via the service, interactions with advertisements that a user may perform, or other suitable items or objects. A user may interact with anything that is capable of being represented in networking system 1102 or by an external system of third-party system 1108, which is separate from networking system 1102 and coupled to networking system 1102 via a network 1104.

In particular embodiments, networking system 1102 may be capable of linking a variety of entities. As an example and not by way of limitation, networking system 1102 may enable users to interact with each other as well as receive content from third-party systems 1108 or other entities, or to allow users to interact with these entities through an application programming interfaces (API) or other communication channels.

In particular embodiments, a third-party system 1108 may include one or more types of servers, one or more data stores, one or more interfaces, including but not limited to APIs, one or more web services, one or more content sources, one or more networks, or any other suitable components, e.g., that servers may communicate with. A third-party system 1108 may be operated by a different entity from an entity operating networking system 1102. In particular embodiments, however, networking system 1102 and third-party systems 1108 may operate in conjunction with each other to provide social-networking services to users of networking system 1102 or third-party systems 1108. In this sense, networking system 1102 may provide a platform, or backbone, which other systems, such as third-party systems 1108, may use to provide social-networking services and functionality to users across the Internet.

In particular embodiments, a third-party system 1108 may include a third-party content object provider. A third-party content object provider may include one or more sources of content objects, which may be communicated to a client device 1106. As an example and not by way of limitation, content objects may include information regarding things or activities of interest to the user, such as, for example, movie show times, movie reviews, restaurant reviews, restaurant menus, product information and reviews, or other suitable information. As another example and not by way of limitation, content objects may include incentive content objects, such as coupons, discount tickets, gift certificates, or other suitable incentive objects.

In particular embodiments, networking system 1102 also includes user-generated content objects, which may enhance a user's interactions with networking system 1102. User-generated content may include anything a user can add, upload, send, or "post" to networking system 1102. As an example and not by way of limitation, a user communicates posts to networking system 1102 from a client device 1106. Posts may include data such as status updates or other textual data, location information, photos, videos, links, music or other similar data or media. Content may also be added to networking system 1102 by a third-party through a "communication channel," such as a newsfeed or stream.

In particular embodiments, networking system 1102 may include a variety of servers, sub-systems, programs, modules, logs, and data stores. In particular embodiments, networking system 1102 may include one or more of the following: a web server, action logger, API-request server, relevance-and-ranking engine, content-object classifier, notification controller, action log, third-party-content-object-exposure log, inference module, authorization/privacy server, search module, advertisement-targeting module, user-interface module, user-profile store, connection store, third-party content store, or location store. Networking system 1102 may also include suitable components such as network interfaces, security mechanisms, load balancers, failover servers, management-and-network-operations consoles, other suitable components, or any suitable combination thereof. In particular embodiments, networking system 1102 may include one or more user-profile stores for storing user profiles. A user profile may include, for example, biographic information, demographic information, behavioral information, social information, or other types of descriptive information, such as work experience, educational history, hobbies or preferences, interests, affinities, or location. Interest information may include interests related to one or more categories. Categories may be general or specific. As an example and not by way of limitation, if a user "likes" an article about a brand of shoes the category may be the brand, or the general category of "shoes" or "clothing." A connection store may be used for storing connection information about users. The connection information may indicate users who have similar or common work experience, group memberships, hobbies, educational history, or are in any way related or share common attributes. The connection information may also include user-defined connections between different users and content (both internal and external). A web server may be used for linking networking system 1102 to one or more client devices 1106 or one or more third-party system 1108 via network 1104. The web server may include a mail server or other messaging functionality for receiving and routing messages between networking system 1102 and one or more client devices 1106. An API-request server may allow a third-party system 1108 to access information from networking system 1102 by calling one or more APIs. An action logger may be used to receive communications from a web server about a user's actions on or off networking system 1102. In conjunction with the action log, a third-party-content-object log may be maintained of user exposures to third-party-content objects. A notification controller may provide information regarding content objects to a client device 1106. Information may be pushed to a client device 1106 as notifications, or information may be pulled from client device 1106 responsive to a request received from client device 1106.

Authorization servers may be used to enforce one or more privacy settings of the users of networking system 1102. A privacy setting of a user determines how particular information associated with a user can be shared. The authorization server may allow users to opt in to or opt out of having their actions logged by networking system 1102 or shared with other systems (e.g., third-party system 1108), such as, for example, by setting appropriate privacy settings. Third-party-content-object stores may be used to store content objects received from third parties, such as a third-party system 1108. Location stores may be used for storing location information received from client devices 1106 associated with users. Advertisement-pricing modules may combine social information, the current time, location information, or other suitable information to provide relevant advertisements, in the form of notifications, to a user.

FIG. 12 illustrates example social graph 1200. In particular embodiments, networking system 1102 may store one or more social graphs 1200 in one or more data stores. In particular embodiments, social graph 1200 may include multiple nodes-which may include multiple user nodes 1202 or multiple concept nodes 1204-and multiple edges 1206 connecting the nodes. Example social graph 1200 illustrated in FIG. 12 is shown, for didactic purposes, in a two-dimensional visual map representation. In particular embodiments, a networking system 1102, client device 1106, or third-party system 1108 may access social graph 1200 and related social-graph information for suitable applications. The nodes and edges of social graph 1200 may be stored as data objects, for example, in a data store (such as a social-graph database). Such a data store may include one or more searchable or query able indexes of nodes or edges of social graph 1200.

In particular embodiments, a user node 1202 may correspond to a user of networking system 1102. As an example and not by way of limitation, a user may be an individual (human user), an entity (e.g., an enterprise, business, or third-party application), or a group (e.g., of individuals or entities) that interacts or communicates with or over networking system 1102. In particular embodiments, when a user registers for an account with networking system 1102, networking system 1102 may create a user node 1202 corresponding to the user, and store the user node 1202 in one or more data stores. Users and user nodes 1202 described herein may, where appropriate, refer to registered users and user nodes 1202 associated with registered users. In addition or as an alternative, users and user nodes 1202 described herein may, where appropriate, refer to users that have not registered with networking system 1102. In particular embodiments, a user node 1202 may be associated with information provided by a user or information gathered by various systems, including networking system 1102. As an example and not by way of limitation, a user may provide his or her name, profile picture, contact information, birth date, sex, marital status, family status, employment, education background, preferences, interests, or other demographic information. In particular embodiments, a user node 1202 may be associated with one or more data objects corresponding to information associated with a user. In particular embodiments, a user node 1202 may correspond to one or more webpages.

In particular embodiments, a concept node 1204 may correspond to a concept. As an example and not by way of limitation, a concept may correspond to a place (such as, for example, a movie theater, restaurant, landmark, or city); a website (such as, for example, a website associated with networking system 1102 or a third-party website associated with a web-application server); an entity (such as, for example, a person, business, group, sports team, or celebrity); a resource (such as, for example, an audio file, video file, digital photo, text file, structured document, or application) which may be located within networking system 1102 or on an external server, such as a web-application server; real or intellectual property (such as, for example, a sculpture, painting, movie, game, song, idea, photograph, or written work); a game; an activity; an idea or theory; another suitable concept; or two or more such concepts. A concept node 1204 may be associated with information of a concept provided by a user or information gathered by various systems, including networking system 1102. As an example and not by way of limitation, information of a concept may include a name or a title; one or more images (e.g., an image of the cover page of a book); a location (e.g., an address or a geographical location); a website (which may be associated with a URL); contact information (e.g., a phone number or an email address); other suitable concept information; or any suitable combination of such information. In particular embodiments, a concept node 1204 may be associated with one or more data objects corresponding to information associated with concept node 1204. In particular embodiments, a concept node 1204 may correspond to one or more webpages.

In particular embodiments, a node in social graph 1200 may represent or be represented by a webpage (which may be referred to as a "profile page"). Profile pages may be hosted by or accessible to networking system 1102. Profile pages may also be hosted on third-party websites associated with a third-party system 1108. As an example and not by way of limitation, a profile page corresponding to a particular external webpage may be the particular external webpage and the profile page may correspond to a particular concept node 1204. Profile pages may be viewable by all or a selected subset of other users. As an example and not by way of limitation, a user node 1202 may have a corresponding user-profile page in which the corresponding user may add content, make declarations, or otherwise express himself or herself. As another example and not by way of limitation, a concept node 1204 may have a corresponding concept-profile page in which one or more users may add content, make declarations, or express themselves, particularly in relation to the concept corresponding to concept node 1204.

In particular embodiments, a concept node 1204 may represent a third-party webpage or resource hosted by a third-party system 1108. The third-party webpage or resource may include, among other elements, content, a selectable or other icon, or other inter-actable object (which may be implemented, for example, in JavaScript, AJAX, or PHP codes) representing an action or activity. As an example and not by way of limitation, a third-party webpage may include a selectable icon such as "like," "check in," "eat," "recommend," or another suitable action or activity. A user viewing the third-party webpage may perform an action by selecting one of the icons (e.g., "eat"), causing a client device 1106 to send to networking system 1102 a message indicating the user's action. In response to the message, networking system 1102 may create an edge (e.g., an "eat" edge) between a user node 1202 corresponding to the user and a concept node 1204 corresponding to the third-party webpage or resource and store edge 1206 in one or more data stores.

In particular embodiments, a pair of nodes in social graph 1200 may be connected to each other by one or more edges 1206. An edge 1206 connecting a pair of nodes may represent a relationship between the pair of nodes. In particular embodiments, an edge 1206 may include or represent one or more data objects or attributes corresponding to the relationship between a pair of nodes. As an example and not by way of limitation, a first user may indicate that a second user is a "friend" of the first user. In response to this indication, networking system 1102 may send a "friend request" to the second user. If the second user confirms the "friend request," networking system 1102 may create an edge 1206 connecting the first user's user node 1202 to the second user's user node 1202 in social graph 1200 and store edge 1206 as social-graph information in one or more of data stores. In the example of FIG. 12, social graph 1200 includes an edge 1206 indicating a friend relation between user nodes 1202 of user "A" and user "B" and an edge indicating a friend relation between user nodes 1202 of user "C" and user "B." Although this disclosure describes or illustrates particular edges 1206 with particular attributes connecting particular user nodes 1202, this disclosure contemplates any suitable edges 1206 with any suitable attributes connecting user nodes 1202. As an example and not by way of limitation, an edge 1206 may represent a friendship, family relationship, business or employment relationship, fan relationship, follower relationship, visitor relationship, subscriber relationship, superior/subordinate relationship, reciprocal relationship, non-reciprocal relationship, another suitable type of relationship, or two or more such relationships. Moreover, although this disclosure generally describes nodes as being connected, this disclosure also describes users or concepts as being connected. Herein, references to users or concepts being connected may, where appropriate, refer to the nodes corresponding to those users or concepts being connected in social graph 1200 by one or more edges 1206.

In particular embodiments, an edge 1206 between a user node 1202 and a concept node 1204 may represent a particular action or activity performed by a user associated with user node 1202 toward a concept associated with a concept node 1204. As an example and not by way of limitation, as illustrated in FIG. 12, a user may "like," "attended," "played," "listened," "cooked," "worked at," or "watched" a concept, each of which may correspond to an edge type or subtype. A concept-profile page corresponding to a concept node 1204 may include, for example, a selectable "check in" icon (such as, for example, a clickable "check in" icon) or a selectable "add to favorites" icon. Similarly, after a user clicks these icons, networking system 1102 may create a "favorite" edge or a "check in" edge in response to a user's action corresponding to a respective action. As another example and not by way of limitation, a user (user "C") may listen to a particular song ("Ramble On") using a particular application (MUSIC, which is an online music application). In this case, networking system 1102 may create a "listened" edge 1206 and a "used" edge (as illustrated in FIG. 12) between user nodes 1202 corresponding to the user and concept nodes 1204 corresponding to the song and application to indicate that the user listened to the song and used the application. Moreover, networking system 1102 may create a "played" edge 1206 (as illustrated in FIG. 12) between concept nodes 1204 corresponding to the song and the application to indicate that the particular song was played by the particular application. In this case, "played" edge 1206 corresponds to an action performed by an external application (MUSIC) on an external audio file (the song "Imagine"). Although this disclosure describes particular edges 1206 with particular attributes connecting user nodes 1202 and concept nodes 1204, this disclosure contemplates any suitable edges 1206 with any suitable attributes connecting user nodes 1202 and concept nodes 1204. Moreover, although this disclosure describes edges between a user node 1202 and a concept node 1204 representing a single relationship, this disclosure contemplates edges between a user node 1202 and a concept node 1204 representing one or more relationships. As an example and not by way of limitation, an edge 1206 may represent both that a user likes and has used at a particular concept. Alternatively, another edge 1206 may represent each type of relationship (or multiples of a single relationship) between a user node 1202 and a concept node 1204 (as illustrated in FIG. 12 between user node 1202 for user "E" and concept node 1204 for "MUSIC").

In particular embodiments, networking system 1102 may create an edge 1206 between a user node 1202 and a concept node 1204 in social graph 1200. As an example and not by way of limitation, a user viewing a concept-profile page (such as, for example, by using a web browser or a special-purpose application hosted by the user's client device 1106) may indicate that he or she likes the concept represented by the concept node 1204 by clicking or selecting a "Like" icon, which may cause the user's client device 1106 to send to networking system 1102 a message indicating the user's liking of the concept associated with the concept-profile page. In response to the message, networking system 1102 may create an edge 1206 between user node 1202 associated with the user and concept node 1204, as illustrated by "like" edge 1206 between the user and concept node 1204. In particular embodiments, networking system 1102 may store an edge 1206 in one or more data stores. In particular embodiments, an edge 1206 may be automatically formed by networking system 1102 in response to a particular user action. As an example and not by way of limitation, if a first user uploads a picture, watches a movie, or listens to a song, an edge 1206 may be formed between user node 1202 corresponding to the first user and concept nodes 1204 corresponding to those concepts. Although this disclosure describes forming particular edges 1206 in particular manners, this disclosure contemplates forming any suitable edges 1206 in any suitable manner.

In particular embodiments, an advertisement may be text (which may be HTML-linked), one or more images (which may be HTML-linked), one or more videos, audio, one or more ADOBE FLASH files, a suitable combination of these, or any other suitable advertisement in any suitable digital format presented on one or more webpages, in one or more e-mails, or in connection with search results requested by a user. In addition or as an alternative, an advertisement may be one or more sponsored stories (e.g., a news-feed or ticker item on networking system 1102). A sponsored story may be a social action by a user (such as "liking" a page, "liking" or commenting on a post on a page, RSVPing to an event associated with a page, voting on a question posted on a page, checking in to a place, using an application or playing a game, or "liking" or sharing a website) that an advertiser promotes, for example, by having the social action presented within a pre-determined area of a profile page of a user or other page, presented with additional information associated with the advertiser, bumped up or otherwise highlighted within news feeds or tickers of other users, or otherwise promoted. The advertiser may pay to have the social action promoted. As an example and not by way of limitation, advertisements may be included among the search results of a search-results page, where sponsored content is promoted over non-sponsored content.

In particular embodiments, an advertisement may be requested for display within social-networking-system webpages, third-party webpages, or other pages. An advertisement may be displayed in a dedicated portion of a page, such as in a banner area at the top of the page, in a column at the side of the page, in a GUI of the page, in a pop-up window, in a drop-down menu, in an input field of the page, over the top of content of the page, or elsewhere with respect to the page. In addition or as an alternative, an advertisement may be displayed within an application. An advertisement may be displayed within dedicated pages, requiring the user to interact with or watch the advertisement before the user may access a page or utilize an application. The user may, for example view the advertisement through a web browser.

A user may interact with an advertisement in any suitable manner. The user may click or otherwise select the advertisement. By selecting the advertisement, the user may be directed to (or a browser or other application being used by the user) a page associated with the advertisement. At the page associated with the advertisement, the user may take additional actions, such as purchasing a product or service associated with the advertisement, receiving information associated with the advertisement, or subscribing to a newsletter associated with the advertisement. An advertisement with audio or video may be played by selecting a component of the advertisement (like a "play button"). Alternatively, by selecting the advertisement, networking system 1102 may execute or modify a particular action of the user.

An advertisement may also include social-networking-system functionality that a user may interact with. As an example and not by way of limitation, an advertisement may enable a user to "like" or otherwise endorse the advertisement by selecting an icon or link associated with endorsement. As another example and not by way of limitation, an advertisement may enable a user to search (e.g., by executing a query) for content related to the advertiser. Similarly, a user may share the advertisement with another user (e.g., through networking system 1102) or RSVP (e.g., through networking system 1102) to an event associated with the advertisement. In addition or as an alternative, an advertisement may include social-networking-system context directed to the user. As an example and not by way of limitation, an advertisement may display information about a friend of the user within networking system 1102 who has taken an action associated with the subject matter of the advertisement.

In particular embodiments, networking system 1102 may determine the social-graph affinity (which may be referred to herein as "affinity") of various social-graph entities for each other. Affinity may represent the strength of a relationship or level of interest between particular objects associated with the online social network, such as users, concepts, content, actions, advertisements, other objects associated with the online social network, or any suitable combination thereof. Affinity may also be determined with respect to objects associated with third-party systems 1108 or other suitable systems. An overall affinity for a social-graph entity for each user, subject matter, or type of content may be established. The overall affinity may change based on continued monitoring of the actions or relationships associated with the social-graph entity. Although this disclosure describes determining particular affinities in a particular manner, this disclosure contemplates determining any suitable affinities in any suitable manner.

In particular embodiments, networking system 1102 may measure or quantify social-graph affinity using an affinity coefficient (which may be referred to herein as "coefficient"). The coefficient may represent or quantify the strength of a relationship between particular objects associated with the online social network. The coefficient may also represent a probability or function that measures a predicted probability that a user will perform a particular action based on the user's interest in the action. In this way, a user's future actions may be predicted based on the user's prior actions, where the coefficient may be calculated at least in part based on the history of the user's actions. Coefficients may be used to predict any number of actions, which may be within or outside of the online social network. As an example and not by way of limitation, these actions may include various types of communications, such as sending messages, posting content, or commenting on content; various types of observation actions, such as accessing or viewing profile pages, media, or other suitable content; various types of coincidence information about two or more social-graph entities, such as being in the same group, tagged in the same photograph, checked-in at the same location, or attending the same event; or other suitable actions. Although this disclosure describes measuring affinity in a particular manner, this disclosure contemplates measuring affinity in any suitable manner.

In particular embodiments, networking system 1102 may use a variety of factors to calculate a coefficient. These factors may include, for example, user actions, types of relationships between objects, location information, other suitable factors, or any combination thereof. In particular embodiments, different factors may be weighted differently when calculating the coefficient. The weights for each factor may be static or the weights may change according to, for example, the user, the type of relationship, the type of action, the user's location, and so forth. Ratings for the factors may be combined according to their weights to determine an overall coefficient for the user. As an example and not by way of limitation, particular user actions may be assigned both a rating and a weight while a relationship associated with the particular user action is assigned a rating and a correlating weight (e.g., so the weights total 100%). To calculate the coefficient of a user towards a particular object, the rating assigned to the user's actions may comprise, for example, 60% of the overall coefficient, while the relationship between the user and the object may comprise 40% of the overall coefficient. In particular embodiments, the networking system 1102 may consider a variety of variables when determining weights for various factors used to calculate a coefficient, such as, for example, the time since information was accessed, decay factors, frequency of access, relationship to information or relationship to the object about which information was accessed, relationship to social-graph entities connected to the object, short- or long-term averages of user actions, user feedback, other suitable variables, or any combination thereof. As an example and not by way of limitation, a coefficient may include a decay factor that causes the strength of the signal provided by particular actions to decay with time, such that more recent actions are more relevant when calculating the coefficient. The ratings and weights may be continuously updated based on continued tracking of the actions upon which the coefficient is based. Any type of process or algorithm may be employed for assigning, combining, averaging, and so forth the ratings for each factor and the weights assigned to the factors. In particular embodiments, networking system 1102 may determine coefficients using machine-learning algorithms trained on historical actions and past user responses, or data farmed from users by exposing them to various options and measuring responses. Although this disclosure describes calculating coefficients in a particular manner, this disclosure contemplates calculating coefficients in any suitable manner.

In particular embodiments, networking system 1102 may calculate a coefficient based on a user's actions. Networking system 1102 may monitor such actions on the online social network, on a third-party system 1108, on other suitable systems, or any combination thereof. Any suitable type of user actions may be tracked or monitored. Typical user actions include viewing profile pages, creating or posting content, interacting with content, joining groups, listing and confirming attendance at events, checking-in at locations, liking particular pages, creating pages, and performing other tasks that facilitate social action. In particular embodiments, networking system 1102 may calculate a coefficient based on the user's actions with particular types of content. The content may be associated with the online social network, a third-party system 1108, or another suitable system. The content may include users, profile pages, posts, news stories, headlines, instant messages, chat room conversations, emails, advertisements, pictures, video, music, other suitable objects, or any combination thereof. Networking system 1102 may analyze a user's actions to determine whether one or more of the actions indicate an affinity for subject matter, content, other users, and so forth. As an example and not by way of limitation, if a user may make frequently posts content related to "coffee" or variants thereof, networking system 1102 may determine the user has a high coefficient with respect to the concept "coffee." Particular actions or types of actions may be assigned a higher weight and/or rating than other actions, which may affect the overall calculated coefficient. As an example and not by way of limitation, if a first user emails a second user, the weight or the rating for the action may be higher than if the first user simply views the user-profile page for the second user.

In particular embodiments, networking system 1102 may calculate a coefficient based on the type of relationship between particular objects. Referencing the social graph 1200, networking system 1102 may analyze the number and/or type of edges 1206 connecting particular user nodes 1202 and concept nodes 1204 when calculating a coefficient. As an example and not by way of limitation, user nodes 1202 that are connected by a spouse-type edge (representing that the two users are married) may be assigned a higher coefficient than a user node 1202 that are connected by a friend-type edge. In other words, depending upon the weights assigned to the actions and relationships for the particular user, the overall affinity may be determined to be higher for content about the user's spouse than for content about the user's friend. In particular embodiments, the relationships a user has with another object may affect the weights and/or the ratings of the user's actions with respect to calculating the coefficient for that object. As an example and not by way of limitation, if a user is tagged in first photo, but merely likes a second photo, networking system 1102 may determine that the user has a higher coefficient with respect to the first photo than the second photo because having a tagged-in-type relationship with content may be assigned a higher weight and/or rating than having a like-type relationship with content. In particular embodiments, networking system 1102 may calculate a coefficient for a first user based on the relationship one or more second users have with a particular object. In other words, the connections and coefficients other users have with an object may affect the first user's coefficient for the object. As an example and not by way of limitation, if a first user is connected to or has a high coefficient for one or more second users, and those second users are connected to or have a high coefficient for a particular object, networking system 1102 may determine that the first user should also have a relatively high coefficient for the particular object. In particular embodiments, the coefficient may be based on the degree of separation between particular objects. The lower coefficient may represent the decreasing likelihood that the first user will share an interest in content objects of the user that is indirectly connected to the first user in the social graph 1200. As an example and not by way of limitation, social-graph entities that are closer in the social graph 1200 (i.e., fewer degrees of separation) may have a higher coefficient than entities that are further apart in the social graph 1200.

In particular embodiments, networking system 1102 may calculate a coefficient based on location information. Objects that are geographically closer to each other may be considered to be more related, or of more interest, to each other than more distant objects. In particular embodiments, the coefficient of a user towards a particular object may be based on the proximity of the object's location to a current location associated with the user (or the location of a client device 1106 of the user). A first user may be more interested in other users or concepts that are closer to the first user. As an example and not by way of limitation, if a user is one mile from an airport and two miles from a gas station, networking system 1102 may determine that the user has a higher coefficient for the airport than the gas station based on the proximity of the airport to the user.

In particular embodiments, networking system 1102 may perform particular actions with respect to a user based on coefficient information. Coefficients may be used to predict whether a user will perform a particular action based on the user's interest in the action. A coefficient may be used when generating or presenting any type of objects to a user, such as advertisements, search results, news stories, media, messages, notifications, or other suitable objects. The coefficient may also be utilized to rank and order such objects, as appropriate. In this way, networking system 1102 may provide information that is relevant to user's interests and current circumstances, increasing the likelihood that they will find such information of interest. In particular embodiments, networking system 1102 may generate content based on coefficient information. Content objects may be provided or selected based on coefficients specific to a user. As an example and not by way of limitation, the coefficient may be used to generate media for the user, where the user may be presented with media for which the user has a high overall coefficient with respect to the media object. As another example and not by way of limitation, the coefficient may be used to generate advertisements for the user, where the user may be presented with advertisements for which the user has a high overall coefficient with respect to the advertised object. In particular embodiments, networking system 1102 may generate search results based on coefficient information. Search results for a particular user may be scored or ranked based on the coefficient associated with the search results with respect to the querying user. As an example and not by way of limitation, search results corresponding to objects with higher coefficients may be ranked higher on a search-results page than results corresponding to objects having lower coefficients.

In particular embodiments, networking system 1102 may calculate a coefficient in response to a request for a coefficient from a particular system or process. To predict the likely actions a user may take (or may be the subject of) in a given situation, any process may request a calculated coefficient for a user. The request may also include a set of weights to use for various factors used to calculate the coefficient. This request may come from a process running on the online social network, from a third-party system 1108 (e.g., via an API or other communication channel), or from another suitable system. In response to the request, networking system 1102 may calculate the coefficient (or access the coefficient information if it has previously been calculated and stored). In particular embodiments, networking system 1102 may measure an affinity with respect to a particular process. Different processes (both internal and external to the online social network) may request a coefficient for a particular object or set of objects. Networking system 1102 may provide a measure of affinity that is relevant to the particular process that requested the measure of affinity. In this way, each process receives a measure of affinity that is tailored for the different context in which the process will use the measure of affinity.

In connection with social-graph affinity and affinity coefficients, particular embodiments may utilize one or more systems, components, elements, functions, methods, operations, or steps disclosed in U.S. Patent Application No. 11/503093, filed 11 August 2006, U.S. Patent Application No. 12/9711027, filed 22 December 2010, U.S. Patent Application No. 12/978265, filed 23 December 2010, and U.S. Patent Application No. 13/632869, field 01 October 2012.

In particular embodiments, one or more of the content objects of the online social network may be associated with a privacy setting. The privacy settings (or "access settings") for an object may be stored in any suitable manner, such as, for example, in association with the object, in an index on an authorization server, in another suitable manner, or any combination thereof. A privacy setting of an object may specify how the object (or particular information associated with an object) can be accessed (e.g., viewed or shared) using the online social network. Where the privacy settings for an object allow a particular user to access that object, the object may be described as being "visible" with respect to that user. As an example and not by way of limitation, a user of the online social network may specify privacy settings for a user-profile page identify a set of users that may access the work experience information on the user-profile page, thus excluding other users from accessing the information. In particular embodiments, the privacy settings may specify a "blocked list" of users that should not be allowed to access certain information associated with the object. In other words, the blocked list may specify one or more users or entities for which an object is not visible. As an example and not by way of limitation, a user may specify a set of users that may not access photos albums associated with the user, thus excluding those users from accessing the photo albums (while also possibly allowing certain users not within the set of users to access the photo albums). In particular embodiments, privacy settings may be associated with particular social-graph elements. Privacy settings of a social-graph element, such as a node or an edge, may specify how the social-graph element, information associated with the social-graph element, or content objects associated with the social-graph element can be accessed using the online social network. As an example and not by way of limitation, a particular concept node 1204 corresponding to a particular photo may have a privacy setting specifying that the photo may only be accessed by users tagged in the photo and their friends. In particular embodiments, privacy settings may allow users to opt in or opt out of having their actions logged by networking system 1102 or shared with other systems (e.g., third-party system 1108). In particular embodiments, the privacy settings associated with an object may specify any suitable granularity of permitted access or denial of access. As an example and not by way of limitation, access or denial of access may be specified for particular users (e.g., only me, my roommates, and my boss), users within a particular degrees-of-separation (e.g., friends, or friends-of-friends), user groups (e.g., the gaming club, my family), user networks (e.g., employees of particular employers, students or alumni of particular university), all users ("public"), no users ("private"), users of third-party systems 1108, particular applications (e.g., third-party applications, external websites), other suitable users or entities, or any combination thereof. Although this disclosure describes using particular privacy settings in a particular manner, this disclosure contemplates using any suitable privacy settings in any suitable manner.

In particular embodiments, one or more servers may be authorization/privacy servers for enforcing privacy settings. In response to a request from a user (or other entity) for a particular object stored in a data store, networking system 1102 may send a request to the data store for the object. The request may identify the user associated with the request and may only be sent to the user (or a client device 1106 of the user) if the authorization server determines that the user is authorized to access the object based on the privacy settings associated with the object. If the requesting user is not authorized to access the object, the authorization server may prevent the requested object from being retrieved from the data store, or may prevent the requested object from be sent to the user. In the search query context, an object may only be generated as a search result if the querying user is authorized to access the object. In other words, the object must have a visibility that is visible to the querying user. If the object has a visibility that is not visible to the user, the object may be excluded from the search results. Although this disclosure describes enforcing privacy settings in a particular manner, this disclosure contemplates enforcing privacy settings in any suitable manner.

The foregoing specification is described with reference to specific exemplary embodiments thereof. Various embodiments and aspects of the disclosure are described with reference to details discussed herein, and the accompanying drawings illustrate the various embodiments. The description above and drawings are illustrative and are not to be construed as limiting. Numerous specific details are described to provide a thorough understanding of various embodiments.

The additional or alternative embodiments may be embodied in other specific forms without departing from its essential characteristics. The described embodiments are to be considered in all respects only as illustrative and not restrictive. The scope of the invention is, therefore, indicated by the appended claims rather than by the foregoing description. All changes that come within the meaning and range of equivalency of the claims are to be embraced within their scope.

## Claims

1. A computer-implemented method comprising:
conducting, by a client device, a video call with a recipient participant device by receiving video data through a video data channel established for the video call from the recipient participant device;
displaying, within a digital video call interface, a first video captured by the client device;
displaying, within the digital video call interface, a second video from the recipient participant device by rendering the video data received through the video data channel;
receiving augmented reality data indicating an augmented reality element from the recipient participant device through an augmented reality data channel established for the video call with the recipient participant device; and
rendering the augmented reality element within the first video displayed within the digital video call interface based on the received augmented reality data.

2. The computer-implemented method of claim 1, further comprising rendering the augmented reality element within the first video displayed within the digital video call interface to share an augmented reality environment scene depicted within the second video from the recipient participant device, wherein the augmented reality element modifies at least one of a background, foreground, or video filter of the first video.

3. The computer-implemented method of claim 1 or claim 2, further comprising:
receiving additional augmented reality data indicating a modification to the augmented reality element from the recipient participant device through the augmented reality data channel; and
modifying the augmented reality element within the first video based on the additional augmented reality data.

4. The computer-implemented method of any preceding claim, further comprising:
displaying, within the digital video call interface, the second video from the recipient participant device to depict an additional augmented reality element exiting a frame of the second video by rendering the video data received through the video data channel;
receiving additional augmented reality data for the additional augmented reality element from the recipient participant device through the augmented reality data channel; and
rendering the additional augmented reality element within the first video based on the received additional augmented reality data to depict the additional augmented reality element entering a frame of the first video

5. The computer-implemented method of claim 4, further comprising:
identifying a participant identifier from the additional augmented reality data; and
determining to render the additional augmented reality element within the first video by matching the participant identifier to the client device.

6. The computer-implemented method of claim 4 or claim 5, further comprising:
identifying an object vector from the additional augmented reality data; and
rendering the additional augmented reality element within the first video at a particular location and moving in a particular direction utilizing the object vector.

7. The computer-implemented method of any preceding claim, further comprising:
rendering the augmented reality element within the first video to display an augmented reality effect interacting with a user depicted within the first video; and
displaying, within the digital video call interface, the second video from the recipient participant device portraying an additional augmented reality effect interacting with a recipient user depicted within the second video.

8. The method of any preceding claim, further comprising:
detecting a user movement interaction within the first video captured by the computing device; and
modifying the augmented reality element within the first video based on the user movement interaction.

9. The method of any preceding claim, further comprising:
identifying a selection indicating the computing device as a subject participant within the augmented reality data; and
rendering the augmented reality effect within the first video on the computing device to be different from the additional augmented reality effect displayed in the second video based on the selection indicating the computing device as the subject participant.

10. The method of any preceding claim, further comprising: receiving the augmented reality data indicating the augmented reality element by filtering a set of augmented reality data in the augmented reality data channel.

11. A non-transitory computer-readable medium storing instructions that, when executed by at least one processor, cause a computing device to carry out the steps of any of claims 1 to 10.

12. A shared augmented reality video call system comprising:
at least one server configured to establish a shared augmented reality video call between a first participant device and a second participant device by establishing a video data channel and an augmented reality data channel between the first participant device and the second participant device, wherein:
the first participant device captures a first video stream and transmits the first video stream to the second participant device via the video data channel;
the second participant device captures a second video stream and transmits the second video stream to the first participant device via the video data channel;
the first participant device sends an augmented reality identifier to the second participant device via the augmented reality data channel; and
the second participant device renders the second video stream with an augmented reality element associated with the augmented reality identifier.

13. The shared augmented reality video call system of claim 12, further comprising the at least one server configured to establish the shared augmented reality video call, wherein the first participant device renders the first video stream with an additional augmented reality element associated with the augmented reality identifier to share an augmented reality environment scene depicted within the second video stream from the second participant device ; and/or preferably further comprising the at least one server configured to establish the shared augmented reality video call, wherein:
the first participant device sends an additional augmented reality identifier to indicate an interaction with the augmented reality element; and
the second participant device renders the second video stream with a modification to the augmented reality element based on the additional augmented reality identifier.

14. The shared augmented reality video call system of claim 12 or claim 13, further comprising the at least one server configured to establish the shared augmented reality video call, wherein:
the first participant device transmits the first video stream to the second participant device via the video data channel to depict the augmented reality element within the first video stream; and
upon sending the augmented reality identifier to the second participant device via the augmented reality data channel:
the first participant device transmits the first video stream to the second participant device via the video data channel to depict the augmented reality element exiting a frame of the first video stream; and
the second participant device renders the second video stream with the augmented reality element associated with the augmented reality identifier entering a frame of the second video stream; and/or preferably further comprising the at least one server configured to establish the shared augmented reality video call, wherein:
the first participant device sends the augmented reality identifier to the second participant device via the augmented reality data channel to indicate an object vector for the augmented reality element; and
the second participant device renders the second video stream with the augmented reality element associated with the augmented reality identifier at a particular location and moving in a particular direction utilizing the object vector.

15. The shared augmented reality video call system of any of claims 12 to 14, further comprising the at least one server configured to establish the shared augmented reality video call, wherein:
the second participant device renders the second video stream with the augmented reality element to display an augmented reality effect interacting with a user depicted within the second video stream; and
the first participant device renders the first video stream with an additional augmented reality effect interacting with a user depicted within the first video stream; and/or preferably further comprising the at least one server configured to establish the shared augmented reality video call, wherein:
the first participant device sends the augmented reality identifier to a plurality of participant devices via the augmented reality data channel; and
the plurality of participant devices render video streams with the augmented reality element associated with the augmented reality identifier.
